# EUROPEAN PATENT SPECIFICATION

(11) **EP 1 767 562 B1**
(45) Date of publication and mention of the grant of the patent: **13.03.2013**
(21) Application number: 05755774.6
(22) Date of filing: 28.06.2005
(51) Int. Cl.: C08G 64/14, C08L 69/00

(54) **RESIN COMPOSITION, PROCESS FOR PRODUCING RESIN COMPOSITION, INTERMEDIATE FOR RESIN COMPOSITION, AND MOLDED ARTICLE**
HARZZUSAMMENSETZUNG, VERFAHREN ZUR HERSTELLUNG EINER HARZZUSAMMENSETZUNG, ZWISCHENPRODUKT FÜR HARZZUSAMMENSETZUNG UND FORMKÖRPER
COMPOSITION À BASE DE RÉSINE, PROCÉDÉ DE PRODUCTION, INTERMEDIAIRE ET PIÈCE MOULÉE

(30) Priority: 02.07.2004 JP 2004196973
(43) Date of publication of application: 28.03.2007
(73) Proprietor: NISSAN MOTOR COMPANY LIMITED, Yokohama-shi Kanagawa 221-0023 (JP)
(72) Inventor: SEINO, Takashi c/o Nissan Motor Co., Ltd, Kanagawa 243-0192 (JP); KAI, Yasuaki c/o Nissan Motor Co., Ltd, Kanagawa 243-0192 (JP); ITO, Tomohiro c/o Nissan Motor Co., Ltd, Kanagawa 243-0192 (JP); MURAMATSU, Hironobu c/o Nissan Motor Co., Ltd, Kanagawa 243-0192 (JP); KAWA, Manabu c/o Mitsubishi Chemical Group Inc., Kanagawa 227-8502 (JP); SOMA, Minoru c/o Mitsubishi Chemical Group Inc., Kanagawa 2278502 (JP)
(74) Representative: Schaeberle, Steffen
(86) International application number: PCT/JP2005/011852
(87) International publication number: WO 2006/003900

(56) References cited:
- EP-A- 0 158 660
- EP-A2- 0 661 311
- EP-A2- 0 918 061
- EP-A2- 1 054 035

## Description

### TECHNICAL FIELD

The present invention relates to a resin composition composed of polycarbonate resin, a method for producing the resin composition, an intermediate of the resin composition, and a molded article containing the resin composition.

### BACKGROUND ART

Window glasses of an automobile occupy a majority of an outer shape thereof, and are important constituents in terms of driving and appearance. Owing to the advent of a variety of bending glasses, a degree of freedom in shape of the window glasses has been increased, and an area where the window glasses are used have also been increased. Therefore, weight reduction and safety have been required for the window glasses. Moreover, in recent headlamps, there are many with novel forms, and for example, requirements for the degree of freedom in shape and for optical performance have bee being raised.

Inorganic glass has been used for the window glasses, the headlamps, and the like. In recent years, an attempt to use resin-made glass instead of the inorganic glass has been made. However, the resin-made glass has a smaller elastic modulus as compared with the inorganic glass, and accordingly, for example, it is difficult to apply the resin-made glass to a large window glass.

For the purpose of enhancing mechanical strength and the like of the resin composition, for example, glass fiber has been commonly compounded, into a resin composition, as a filler that serves as a reinforcement. However, since the fiber filler has a diameter of approximately 10 microns, and a length of approximately 200 microns, visible light is reflected on the fiber filler without transmitting therethrough, and the resin-made glass becomes opaque. Hence, the resin composition reinforced by the filler cannot be applied as the resin-made glass to the window glass of the automobile.

Moreover, the resin-made glass has lower surface hardness as compared with the inorganic glass, and for example, is prone to be scratched by a wiper. Also from this point, it is difficult to apply the resin-made glass to the window glass part. In consideration for such a problem, there has been made an attempt to harden a surface of the resin-made glass by implementing a coupling treatment for a surface of the resin composition constructing the resin-made glass. Also in this case, such surface hardness that the surface can endure long-time abrasion cannot be realized, and the problem of the scratch has not been solved yet.

In order to compensate defects of the resin-made glass in the mechanical strength, the surface hardness, and the like, an attempt to fabricate the window glass by stacking the resin-made glass and the inorganic glass on each other has been made. In a summer season in particular, for example, interfacial peeling occurs between the resin-made glass and the inorganic glass owing to a difference therebetween in thermal expansion, and accordingly, the window glass in which the resin-made glass and the inorganic glass are stacked on each other has not been put into practical use yet.

In consideration for such a point, in recent years, a method for improving resin property by a molecular level composition has attracted attention. As a representative method, there is mentioned "Polyamide composite material and production method of the same (Japanese Examined Patent Publication No. H07 (1995)-47644)" by Toyota Central R&D Labs., Inc. and others. This method is a method in which montmorillonite is used as the inorganic filler, and caprolactam, which is a raw material of Nylon, is impregnated between layers of montmorillonite, followed by polymerization, thereby compounding Nylon polymer and an inorganic filler. According to this method, physical properties of the resin-made glass are enhanced; however, for example, the resin-made glass cannot be used for the window glass because moisture absorption property is inherent therein and the surface hardness is insufficient, and transparency is insufficient.

As another method, there is "Resin composition, production method of the same, and stacked body thereof (Japanese Patent Laid-Open Publication No. H05 (1993)-86241)" by Kuraray Co., Ltd. This is a method in which a copolymer of ethylene and vinyl alcohol is impregnated into clay, an impregnated body thus obtained is fused and kneaded with polyamide, thereby obtaining a stacked film of a resultant thereof and polypropylene resin. Moreover, in "Polyarylene composite material and production method of the same (Japanese Patent Laid-Open Publication No. H05 (1993)-194851)" by Tosoh Corporation, there is disclosed a production method of a resin composition in which lamellar silicate and polyarylene sulfide resin are compounded together. In "Polyamide resin composition and production method of the same (Japanese Patent Laid-Open Publication No. H05 (1993)-306370)" by Mitsubishi Chemical Corporation, there is disclosed a production method of a polyamide resin composition in which lamellar phosphate and polyamide are compounded together, wherein a lamellar phosphate derivative and polyamide monomer are heated and polymerized.

In "Composite material, production method of the same, and resin molding material containing the composite material (Japanese Patent Laid-Open Publication No. H06 (1994)-41346)" by Calp Corporation, there is disclosed a production method of a resin composition in which montmorillonite and a vinyl-based polymer compound are compounded together. Moreover, in "Reinforced polyamide resin composition and production method of the same (Japanese Patent Laid-Open Publication No. H06 (1994)-248176)" by Unitika Ltd., there is disclosed a production method of a polyamide resin composition in which fluorine containing mica and polyamide resin are compounded together, wherein the fluorine mica and polyamide monomer are heated and polymerized. Furthermore, in "Thermoplastic polyester composition, production method of the same, and molded article thereof (Japanese Patent Laid-Open Publication No. H07 (1995)-26123)" by Toyobo Co., Ltd., there is disclosed a production method of a polyester resin composition in which clay and polyester resin are compounded together.

In any of these methods, an inorganic filler such as clay and talc is formed into a laminated state, and predetermined resin is intercalated between the layers. Hence, though strength property of the obtained resin composition is enhanced, the resin composition cannot be used for the window glass because the moisture absorption property is inherent therein, the surface hardness is insufficient, and the transparency is insufficient.

Moreover, in "Resin window and production method of the same (Japanese Patent Laid-Open Publication No. H11 (1999)-343349)", it is disclosed that silica fine particles are compounded in a synthesis process of acrylic resin. A resin composition obtained here contains the acrylic resin as a base material, and accordingly, heat resistance and impact resistance thereof become insufficient, and the resin composition is not practical. Moreover, in the example of Japanese Patent Laid-Open Publication No. H11-343349, a method is disclosed, in which polycarbonate resin is dissolved into a methylene chloride solution, and the silica fine particles are mixed into a resultant. In this method, it becomes difficult to mix and disperse the silica fine particles when a concentration of silica is increased, and for example, transparency, strength, elasticity, and impact resistance are insufficient, leading to difficulty putting the resin composition into practical use.

With regard to aromatic polycarbonate (hereinafter, sometimes abbreviated as PC) suitable for the purpose for which the impact resistance is required, such as, for example, a window material of the automobile, there is known a method in which inorganic oxide fine particles of silica and the like are compounded and dispersed for the purpose of improving mechanical strength and dimensional stability of the aromatic PC. However, in a PC thermoplastic resin composition containing such oxide fine particles, the mechanical strength and the dimensional stability are improved; however, a problem regarding the transparency is inherent. Even if a primary particle diameter of the inorganic oxide fine particles is reduced in order to improve the transparency, secondary aggregation of the inorganic oxide fine particles occur in the conventional technology, and accordingly, the transparency of the PC thermoplastic resin composition is decreased to a large extent.

Meanwhile, in Japanese Patent Laid-Open Publication No. 2000-327930, the following organic/inorganic hybrid material is disclosed. The organic/inorganic hybrid material is obtained by mixing, with the PC resin, metal oxide particles such as silica, titanium oxide, and the like, of which preferable particle diameter is 0.001 to 0.1 microns, and a first organic polymer such as aromatic polycarbonate and the like, which essentially contains carbon atoms in main skeletons as polymer main chains, and has functional groups bondable to surfaces of the metal oxide particles, for example, has alkoxysilyl groups on molecule terminals. It is shown that this material has high mechanical property and water resistance, and is suitable for high-performance and high-function plastic. This first organic polymer is good in compatibility with the PC resin constructing a matrix, and accordingly, plays a role to allow the metal oxide particles to be compatible with the PC resin.

### DISCLOSURE OF THE INVENTION

However, in order to crosslink the metal oxide particles where the first organic polymer coexists, the first organic polymer forms insoluble and infusible coarse gel. The coarse gel includes the one with a size of 400 nm approximately as large as a wavelength of visible light, which is dispersed into the matrix of the PC resin. Accordingly, even if the coarse gel is dispersed into the matrix of the PC resin, there occurs unevenness in refractive index, of which size is approximately the same as the wavelength of the visible light, and the transparency of the PC resin is damaged. Moreover, this coarse gel generates an infusible foreign object when the PC resin is subjected to processing of thermoplastic molding. The infusible foreign object causes a deterioration of fluidity of the PC resin and a deterioration of gloss of a molded surface, and damages molding processability of the PC resin. Hence, even if this technology brings good transparent feeling and film formability in a thin-film state of the PC resin, this technology has problems in the transparency and the thermoplastic moldability in a bulk molded body.

The present invention has been made in consideration for the above-described problems. It is an object of the present invention to provide a resin composition which is excellent in mechanical strength such as rigidity and impact resistance, surface hardness, thermal dimensional stability such as a linear expansion coefficient, and transparency, in addition, has excellent melt fluidity, and can be suitably used, for example, as organic glass for use in a window glass of an automobile. The inventors of the present invention made an assiduous study in order to achieve the above-described object. As a result, the inventors of the present invention made the following attempt. Specifically, the PC resin originally having high mechanical strength and thermal dimensional stability is used as a base material of the target resin composition, and a variety of alterations and improvements are added to the PC resin, thereby realizing a resin composition having mechanical strength, surface hardness, and thermal dimensional stability, which are enough to replace the conventional inorganic glass.

The strength and rigidity of the PC resin are enhanced in consideration for a molecular structure of the PC as a constituent thereof. In general, when crystallinity of the PC resin is enhanced, the strength is also enhanced, and however, the transparency is decreased. Hence, there was made an attempt to achieve the above-described object by adding a variety of alterations not to the PC resin serving as the base material but to the filler contained in the PC resin.

For example, a variety of reports have been heretofore made regarding the type and size of the filler. For example, in the case where a fiber filler is compounded, when a major axis thereof becomes the wavelength of the visible light or longer, the transparency is decreased. Meanwhile, for example, when a large quantity of silica is compounded as the filler, not only the target mechanical strength cannot be realized owing to an aggregation effect of silica, but also the transparency is decreased. Hence, the inventors of the present invention studied an existence state of the filler in the PC resin serving as the base material, and studied a compounding method of the filler into the PC resin.

As a result, according to the present invention, the inventors of the present invention found out that the inorganic oxide fine particles compounded into the PC resin are covalently bonded to the PC molecules through surface layers thereof having epoxy groups in such a manner that, for example, the epoxy groups are introduced onto the surfaces of the inorganic oxide fine particles, and subsequently, the inorganic oxide fine particles in which the epoxy groups are introduced onto the surfaces are compounded into a monomer serving as a raw material of the PC resin. Hence, the inorganic oxide fine particles are covalently bonded to the PC resin, and exist stably.

In addition, it was found out that the thermoplastic resin composition thus obtained has excellent melt fluidity. This is considered to be derived from excellent thermal mobility intrinsic to ether bonding, that is, from flexibility because the covalent bond generated by a reaction between the epoxy groups existing on the surfaces of the inorganic oxide fine particles and the PC molecules is connecting groups of an aliphatic ether type.

Moreover, it was found out that the inorganic oxide fine particles are uniformly dispersed into the PC resin to achieve high transparency in such a manner that, instead of being directly compounded into the PC resin by kneading and so on, for example, the inorganic oxide fine particles are compounded into the raw material monomer constructing the PC resin in advance, and subsequently, are dispersed thereinto by being subjected to a melting and polymerizing process by an ester exchange method.

Specifically, a resin composition as a first invention is a resin composition according to claim 1 containing polycarbonate molecules to which inorganic oxide fine particles are bonded through connecting groups of an aliphatic ether type represented by a following general formula(1): 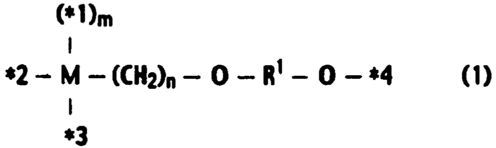 wherein M represents a tri- or tetravalent metal element capable of bonding to surfaces of the inorganic oxide fine particles; m is 0 or 1; n is an integer of 2 to 8 indicating the number of methylene groups in a chain; R¹ represents an aliphatic group derived either from an epoxy group or a glycidyl group and having either a hydroxyl group or an alkylene hydroxyl group linked directly to the straight chain of 2 to 8 carbon atoms, and both terminals of which are bonded to two oxygen atoms adjacent thereto; at least one of *1-, *2- and *3- is a bonding species capable of bonding to the surfaces of the inorganic oxide fine particles, and at least one of the *1-, *2- and *3- is bonded to the surfaces of the inorganic oxide fine particles; and *4- represents a bond with a polycarbonate molecule.

A molded article as a second invention is a molded body formed of a thermoplastic resin composition containing polycarbonate molecules to which inorganic oxide fine particles are bonded through connecting groups of an aliphatic ether type represented by a following general formula (1): 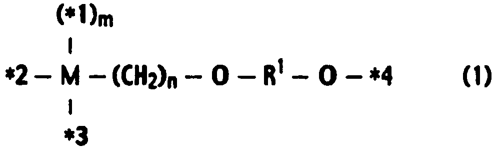 wherein M represents a tri- or tetravalent metal element capable of bonding to surfaces of the inorganic oxide fine particles; m is 0 or 1; n is an integer of 2 to 8 indicating the number of methylene groups in a chain; R¹ represents an aliphatic group derived either from an epoxy group or a glycidyl group and having either a hydroxyl group or an alkylene hydroxyl group linked directly to the straight chain of 2 to 8 carbon atoms and both terminals of which are bonded to two oxygen atoms adjacent thereto; at least one of * 1-, *2- and *3- is a bonding species capable of bonding to the surfaces of the inorganic oxide fine particles, and at least one of the *1-, *2- and *3- is bonded to the surfaces of the inorganic oxide fine particles; and *4- represents a bond with a polycarbonate molecule.

A method for producing a resin composition according to claim 13 as a third invention is a method for producing a resin composition, including the steps of:
forming surface layers having epoxy groups on inorganic oxide fine particles having an average primary particle diameter of 380 nm or less by using connecting groups of an aliphatic ether type represented by a following general formula (1);
mixing the inorganic oxide fine particles on which the surface layers having the epoxy groups are formed with a monomer as a raw material of polycarbonate molecules, thereby obtaining a mixture; and
heating the mixture in a temperature range of 150 to 350°C: 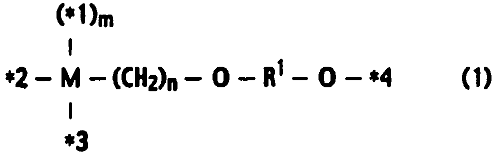
wherein M represents a tri- or tetravalent metal element capable of bonding to surfaces of the inorganic oxide fine particles; m is 0 or 1; n is an integer of 2 to 8 indicating the number of methylene groups in a chain; R¹ represents an aliphatic group derived either from an epoxy group or a glycidyl group and having either a hydroxyl group or an alkylene hydroxyl group linked directly to the straight chain of 2 to 8 carbon atoms and both ends of which are bonded to two oxygen atoms adjacent thereto; at least one of *1-, *2- and *3- is a bonding species capable of bonding to the surfaces of the inorganic oxide fine particles, and at least one of the *1-, *2- and *3- is bonded to the surfaces of the inorganic oxide fine particles; and *4- represents a bond with a polycarbonate molecule.

An intermediate of a resin composition according to claim 16 as a fourth invention is formed of inorganic oxide fine particles having a primary particle diameter of 380 nm or less, in which a monomer as a raw material of a polycarbonate molecule is covalently bonded to epoxy groups of surface layers.

### BRIEF DESCRIPTION OF THE DRAWINGS

FIG 1 is a chart showing a production process of a resin composition according to the present invention.
FIG 2 is reaction formulas when a silica fine particles are subjected to a surface treatment by (3-glycidoxypropyl)trimethoxysilane, and an epoxy groups are introduced onto the surface of the silica fine particles.
FIG 3 is a reaction formula regarding production of an intermediate of the resin composition according to the present invention.
FIG 4 is a reaction formula regarding production of the resin composition according to the present invention.

### BEST MODE FOR CARRYING OUT THE INVENTION

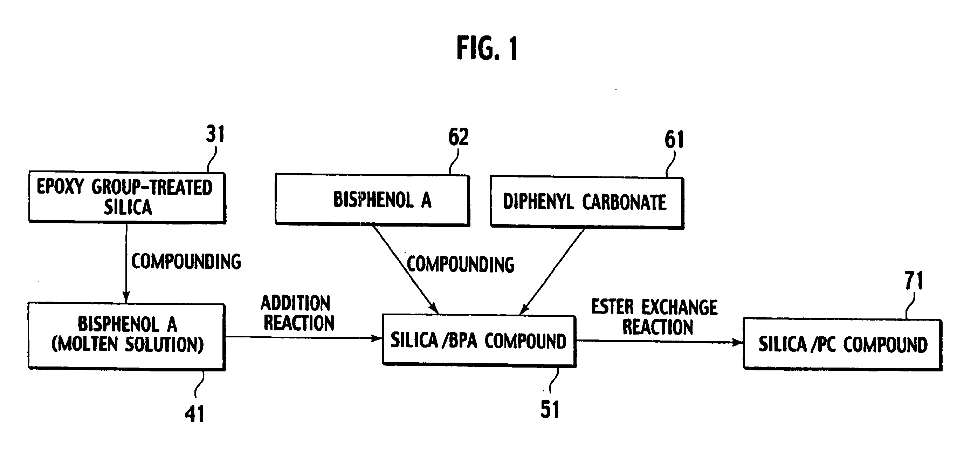

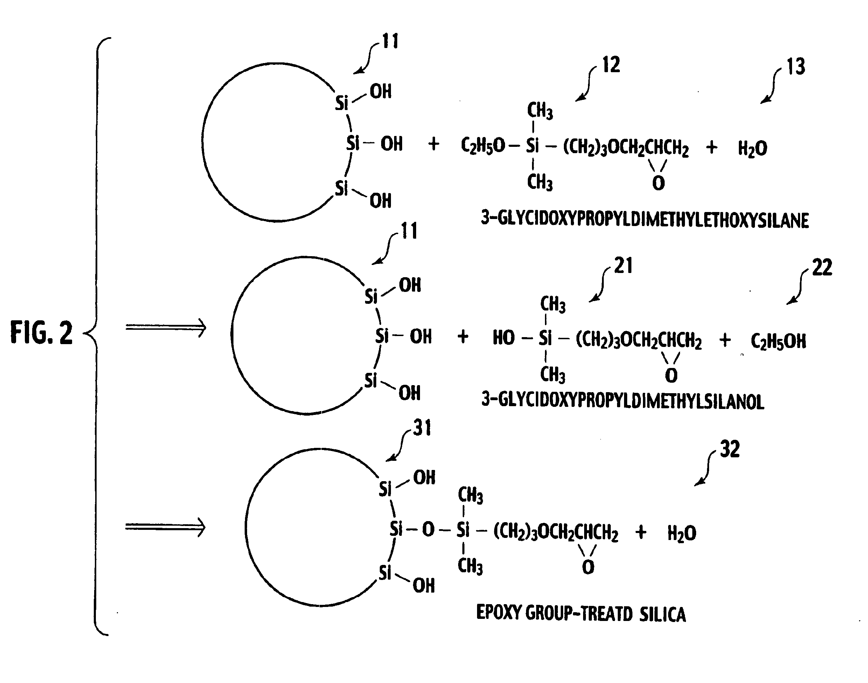

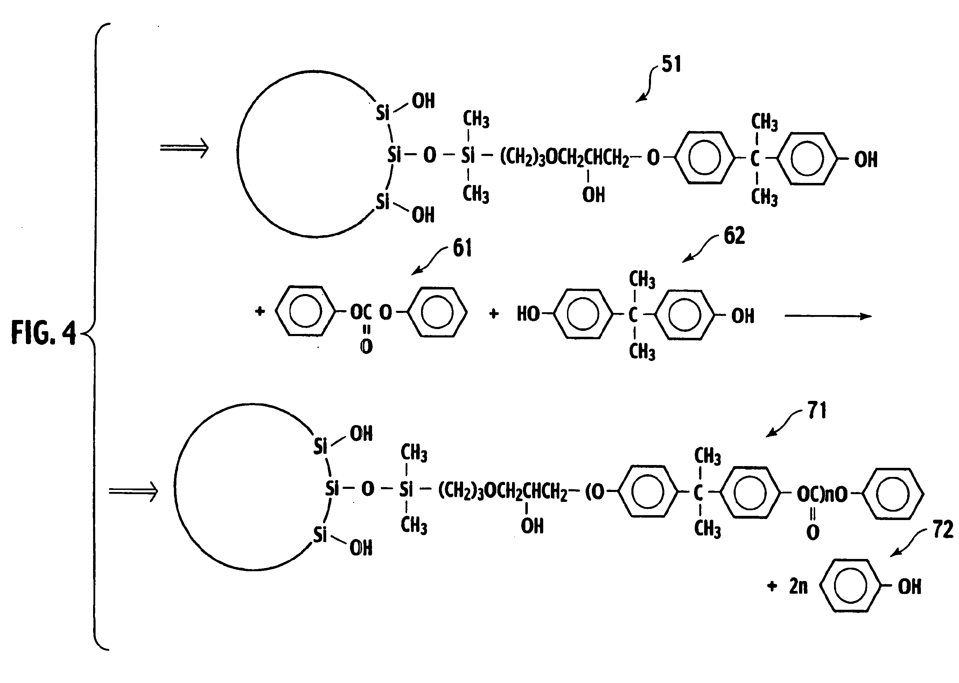

A description will be made in detail of a resin composition, a method for producing the resin composition, an intermediate of the resin composition, and a molded article according to a preferred embodiment of the present invention by using the drawings. FIG 1 shows a production process of the resin composition, and FIGS. 2 to 4 show reaction formulas. The resin composition according to the embodiment of the present invention is a thermoplastic resin composition containing polycarbonate molecules to which inorganic oxide fine particles are bonded through connecting groups of an aliphatic ether type represented by the following general formula (1): 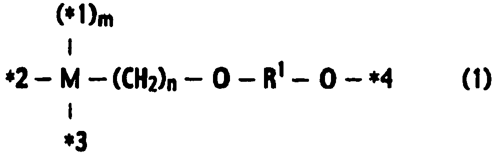 wherein M represents a tri- or tetravalent metal element capable of bonding to surfaces of the inorganic oxide fine particles; m is 0 or 1; n is an integer of 2 to 8 indicating the number of methylene groups in a chain; R¹ represents an aliphatic group derived either from an epoxy group or a glycidyl group and having either a hydroxyl group or an alkylene hydroxyl group linked directly to the straight chain of 2 to 8 carbon atoms and both terminals of which are bonded to two oxygen atoms adjacent thereto; at least one of *1-, *2- and *3- is a bonding species capable of bonding to the surfaces of the inorganic oxide fine particles, and at least one of the *1-, *2- and *3- is bonded to the surfaces of the inorganic oxide fine particles; and *4- represents a bond with a polycarbonate molecule.

For example, when silica fine particles are used as the inorganic oxide fine particles, in the resin composition, epoxy group-treated silica 31 into which epoxy groups are introduced by introducing the connecting groups of the aliphatic ether type represented by the general formula (1) onto a surface of silica is compounded with bisphenol A 41, and the bisphenol A 41 is added to the connecting groups. Thereafter, diphenyl carbonate 61 and bisphenol A 62 are further compounded with a silica/BPA compound 51 generated by the addition reaction, and a silica/PC compound 71 is generated by an ester exchange reaction.

FIGS. 2 to 4 show an example where the silica fine particles are used as the inorganic oxide fine particles, 3-glycidoxypropyldimethylethoxysilane is used as the connecting groups, and diphenyl carbonate is used as the polycarbonate molecule. Silica fine particles 11 and (3-glycidoxypropyl)trimethoxysilane 12 are dissolved in water 13, (3-glycidoxypropyl)trimethoxysilane 12 and water 13 are reacted with each other, and 3-glycidoxypropyldimethylsilanol 21 is thereby generated. The generated 3-glycidoxypropyldimethylsilanol 21 and the silica fine particles 11 are reacted with each other, the connecting groups are introduced onto the surface of the silica fine particles 11, and the epoxy group-treated silica 31 is thereby obtained. Next, the epoxy group-treated silica 31 is compounded and molten with the bisphenol A 41, and a molten solution thus obtained is heated at a temperature of, for example, 160 to 250°C. In such a way, an intermediate of the resin composition, in which the bisphenol A 41 is covalently bonded to the surface of the epoxy group-treated silica 31 through the connecting groups, that is, the silica/BPA compound 51 is obtained. Subsequently, desired quantities of diphenyl carbonate 61 and bisphenol A 62 are additionally compounded with the molten solution to form a polymerization reaction solution, the polymerization reaction solution is heated to, for example, 200°C to 300°C under a reduced-pressure condition of 100 mmHg or less, preferably, 10 mmHg or less, and a condensation polymerization reaction by the ester exchange method is implemented to generate polycarbonate. In such a way, a resin composition 72 is produced. According to this production method, there can be obtained the resin composition 72 which is excellent in mechanical strength such as rigidity and impact resistance, surface hardness, thermal dimensional stability, and transparency, and can be used as practical organic glass such as a window glass, in which the silica fine particles 11 as the inorganic oxide fine particles are uniformly dispersed in the polycarbonate resin.

A description will be made below of the above in more detail.

### (Inorganic oxide fine particles)

The inorganic oxide fine particles for use in the present invention are the ones dispersed into a polycarbonate resin matrix in a state of being bonded to the polycarbonate molecules through the connecting groups of the aliphatic ether group represented by the following general formula (1): 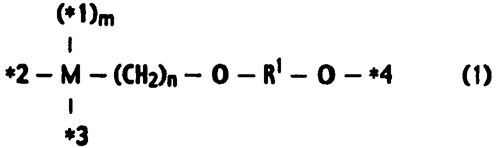 wherein M represents a tri- or tetravalent metal element capable of bonding to surfaces of the inorganic oxide fine particles; m is 0 or 1; n is an integer of 2 to 8 indicating the number of methylene groups in a chain; R¹ represents an aliphatic group derived either from an epoxy group or a glycidyl group and having either a hydroxyl group or an alkylene hydroxyl group linked directly to the straight chain of 2 to 8 carbon atoms and both terminals of which are bonded to two oxygen atoms adjacent thereto; at least one of *1-, *2- and *3- is a bonding species capable of bonding to the surfaces of the inorganic oxide fine particles, and at least one of the *1-, *2- and *3- is bonded to the surfaces of the inorganic oxide fine particles; and *4- represents a bond with the polycarbonate molecule.

As the tri- or tetravalent metal element (M) capable of bonding to the surfaces of the inorganic oxide fine particles, for example, tetravalent metal atoms such as silicon, titanium, zirconium, germanium, tin, or the like, and trivalent metal atoms such as aluminum, boron, or the like are preferable. Among them, silicon, titanium, and aluminum are more preferable, and silicon is the most preferable.

Each of the *1-, *2-, and *3- is a bond capable of bonding to the surfaces of the inorganic oxide fine particles. At least one of the *1-, *2-, and *3- just needs to bond to the surfaces of the inorganic oxide fine particles, and a plurality thereof may bond to the surfaces concerned. As a substituent bonded to the *1-, *2-, and *3- when the *1-, *2-, and *3- do not bond to the surfaces of the inorganic oxide fine particles, there are mentioned: alkyl groups with a carbon number of 1 to 6, for example, methyl group, ethyl group, n-propyl group, isopropyl group, n-butyl group, hexyl group, cyclohexyl group, and the like; alkoxy groups with a carbon number of 1 to 6, for example, methoxy group, ethoxy group, n-propyloxy group, isopropyloxy group, n-butyloxy group, hexyloxy group, cyclohexyloxy group, and the like; aryl groups with a carbon number of 6 to 10, for example, phenyl group, 4-methylphenyl group, 4-ethylphenyl group, 4-isopropylphenyl group, 4-t-butylphenyl group, and the like; and aryloxy groups with a carbon number of 6 to 10, for example, phenoxy group, 4-methylphenoxy group, 4-ethylphenoxy group, 4-isopropylphenoxy group, 4-t-butylphenoxy group, and the like. In terms of easiness for the connecting group of the above-described formula (1) to bond to the inorganic oxide fine particles, alkyl groups with a carbon number of 1 to 3 or alkoxy groups with a carbon number of 1 to 3 are preferable, the methyl group or the methoxy group is more preferable, and the methyl group is the most preferable.

The polycarbonate molecules bonded to the surfaces of the inorganic oxide fine particles as described above become mutually dissolved with the entanglement of polymer chains with the polycarbonate molecules constructing the matrix, or for example, by an interaction of hydrogen bond between the carbonate and the carbonate. As a result, the inorganic oxide fine particles become difficult to mutually aggregate, and are dispersed stably.

There are no limitations on a forming method of the connecting groups of the aliphatic ether group represented by the general formula (1). However, for example, the connecting groups are suitably formed by a method of forming surface layers having the epoxy groups covalently bonded to polycarbonate resin in advance on the surfaces of the inorganic oxide fine particles.

The surface layers are formed by a surface treatment using, for example: an alkoxysilane compound having the epoxy group or a glycidyl group; an organic silicon compound such as a chlorosilane compound; an organic titanium compound such as alkoxytitanium having the epoxy group or the glycidyl group, for example, chlorotitanium; and an organic zirconium compound such as alkoxyzirconium having the epoxy group or the clycidyl group, for example, chlorozirconium. As the organic silicon compound, there can be illustrated 2-(3,4-epoxycyclohexyl)ethyltrimethoxysilane, 5,6-epoxyhexyltriethoxysilane, (3-glycidoxypropyl)trimethoxysilane, (3-glycidoxypropyl)methyldimethoxysilane, (3-glycidoxypropyl)methyldiethoxysilane, (3-glycidoxypropyl)dimethylethoxysilane, and the like.

As the organic titanium compound, there can be illustrated 2-(3,4-epoxycyclohexyl)ethyltrimethoxytitanium, 5,6-epoxyhexyltriethoxytitanium, (3-glycidoxypropyl)trimethoxytitanium, (3-glycidoxypropyl)methyldimethoxytitanium, (3-glycidoxypropyl)methyldiethoxytitanium, (3-glycidoxypropyl)dimethylethoxytitanium, and the like. As the organic zirconium compound, there can be illustrated 2-(3,4-epoxycyclohexyl)ethyltrimethoxyzirconium, 5,6-epoxyhexyltriethoxyzirconium, (3-glycidoxypropyl)trimethoxyzirconium, (3-glycidoxypropyl)methyldimethoxyzirconium, (3-glycidoxypropyl)methyldiethoxyzirconium, (3-glycidoxypropyl)dimethylethoxyzirconium, and the like.

The surface treatment using the organic silicon compound among the organic silicon compound, the organic titanium compound, and the organic zirconium compound is preferable.

FIG 2 is reaction formulas when the silica particle is subjected to the surface treatment by (3-glycidoxypropyl)dimethylethoxysilane, and the surface layer having the epoxy groups is formed on the silica fine particles, that is, the epoxy group is added to the surface of the silica fine particles. In this example, the silica particles 11 and (3-glycidoxypropyl)trimethoxysilane 12 are dissolved in the water 13, the (3-glycidoxypropyl)trimethoxysilane 12 and the water 13 are reacted with each other, and 3-glycidoxypropyldimethylsilanol 21 is thereby generated. The generated 3-glycidoxypropyldimethylsilanol 21 and the silica fine particles 11 are reacted with each other, and the epoxy group-treated silica 31 in which the connecting groups are added to the surface of the silica fine particles 11 is obtained. Note that, as a reference for this reaction, the page 129 of "An Introduction to Epoxy Resin (in Japanese, joint work of Muroi and Ishimura, Kobunshi Kankokai) is mentioned.

Preferably, a surface modification ratio of the inorganic oxide fine particles by the epoxy groups, that is, a ratio at which the surface layers having the epoxy resins occupy the total surfaces is 5 to 50%. When the surface modification ratio is less than 5%, a ratio of the covalent bond between the inorganic oxide fine particles and the polycarbonate resin is reduced, the resin composition finally obtained becomes fragile, and for example, Izod impact and bending strength properties thereof sometimes become insufficient. Meanwhile, when the surface modification ratio exceeds 50%, the resin composition finally obtained is prone to cause gelation, sometimes resulting in process difficulty.

The surface modification ratio can be controlled by changing a processing time by means of a surface treatment agent. Moreover, the surface modification ratio can be obtained by quantifying unreacted hydroxyl groups on the surfaces of the inorganic oxide fine particles by means of an infrared absorption spectrum.

In order to ensure the target transparency of the resin composition, an average primary particle diameter of the inorganic oxide fine particles is necessarily 380 nm as the minimum wavelength of the visible light range or less, preferably, 5 nm to 200 nm, more preferably, 5 nm to 100 nm.

Moreover, a type of the inorganic oxide fine particles is not particularly limited; however, preferably, silica, alumina, titania, zirconia, and composite oxides of these can be used. For example, considering availability, cost, and easiness of the surface treatment, it is preferable to use silica or alumina, and it is particularly preferable to use silica.

Silicon oxides represented by silica are preferably used as the material of the inorganic oxide fine particles in the present invention. The silicon oxides contain silicon atom-oxygen atom bonds as main chemical structure. The most preferable chemical composition of the silicon oxides is a silica composition (SiO₂). The inorganic oxide fine particles may contain elements of other than the silica composition, for example, nonmetal elements such as boron, carbon, nitrogen, fluorine, phosphorus, sulfur, chlorine, as well as, for example, alkaline metal elements such as sodium and potassium, for example, alkaline earth elements such as magnesium and calcium, and for example, metal elements such as aluminum, titanium, zirconium, yttrium, lanthanum, cerium, europium, terbium, and zinc. When the metal elements are contained, it is usually preferable that a content thereof be as small as possible from a viewpoint of chemical stability and colorlessness. The content of the metal elements is usually 0 to 30 wt% as weight of the elements in the composition of the silicon oxides, and an upper limit thereof is preferably 20 wt%, more preferably, 10 wt%. The chemical composition of the silicon oxides is determined by a composition analysis of a residue obtained by firing the thermoplastic resin composition containing the silicon oxides in the air at 650°C for two hours.

As a raw material of the silicon oxides, water glass is usable at low cost. In the case of using the water glass, for example, in some case, the alkaline metal such as sodium or the like remains to damage the chemical stability of the thermoplastic resin composition. Hence, it is preferable that the silicon oxides have a silica composition with purity as high as possible, and for this purpose, it is preferable to produce the silicon oxides by a hydrolytic condensation reaction using alkoxysilanes and/or oligomers thereof as the raw material, that is, a so-called, sol-gel method.

As such alkoxysilanes, for example, there are illustrated: tetraalkoxysilanes such as tetramethoxysilane and tetraethoxysilane; trialkoxysilanes such as methyltrimethoxysilane, methyltriethoxysilane, phenyltrimethoxysilane, phenyltriethoxysilane, 3-aminopropyltrimethoxysilane, 3-aminopropyltriethoxysilane, 3-glycidyloxypropyltrimethoxysilane, 3-glycidyloxypropyltriethoxysilane, 3-acryloyloxypropyltrimethoxysilane, 3-acryloyloxypropyltriethoxysilane, and 3-mercaptopropyltriethoxysilane; dialkoxysilanes such as dimethyldimethoxysilane, and dimethyldiethoxysilane; and the like. As such oligomers of the alkoxysilanes, for example, an oligomer of tetramethoxysilane, such as MKC Silicate (registered trademark) MS-51 made by Mitsubishi Chemical Corporation, is illustrated.

Moreover, when the inorganic oxide fine particles are formed of silica, it is preferable that the inorganic oxide fine particles be formed of colloidal silica from a viewpoint that a size and shape thereof can be controlled with ease.

It is preferable that the shape of the inorganic oxide fine particles be spherical, dumbbell-like, or chain-like. In this case, a compounding effect of the inorganic oxide fine particles as the filler is increased in the resin composition, and separately from the effect of the covalent bond of the inorganic oxide fine particles to the polycarbonate resin, the mechanical strength of the resin composition can be increased by compounding the inorganic oxide fine particles.

### (Polycarbonate resin)

The polycarbonate resin is a polymer produced by a reaction between one or more types of diols and carbonate esters such as bisalkylcarbonate, bisarylcarbonate, and phosgene. In the present invention, the polycarbonate resin may be a single one or a combination of plural types. What is preferable in the present invention is to use aromatic polycarbonate resin because the aromatic polycarbonate resin has excellent heat deformation resistance, that is, a high glass transition temperature, and particularly has high impact resistance among the mechanical strength. As the aromatic polycarbonate, it is preferable to use bisphenols. In this case, multivalent phenols which is trivalent or more may be contained as a copolymer component. Moreover, aliphatic diols may be copolymerized according to needs.

The aromatic polycarbonate resin in the present invention may be produced by any conventionally known method such as, for example: (a) an interfacial polymerization method of performing a polymerization condensation reaction for alkaline metal salt of bisphenols and a carbonate ester derivative as raw materials active with a nucleophilic attack, for example, by phosgene on an interface between an organic solvent dissolving a generated polymer and alkaline water; (b) a pyridine method of performing the polymerization condensation reaction for, as the raw materials, bisphenols and the carbonate ester derivative active with the nucleophilic attack, for example, by phosgene in an organic base such as pyridine; and (c) a melt polymerization method of performing melt polycondensation for, as the raw materials, bisphenols and carbonate esters such as bisalkylcarbonate and bisarylcarbonate, preferably, diphenylcarbonate. Moreover, in order to obtain the thermoplastic resin to be described later, the above-described inorganic oxide fine particles and/or the raw material thereof may be added at any stage of the production method of these aromatic polycarbonate resins, for example, at a raw material solution preparation stage, a polymerization stage, a pelleting stage by an extruder, and the like.

Preferably, a degree of polymerization of the polycarbonate resin used by being contained in the resin composition of the present invention is 800 to 70000 of a weight-average molecular weight in conversion to polystyrene measured by GPC (gel permeation chromatography) using chloroform at 40°C as a developing solvent. When the molecular weight is less than 800, the resin composition finally obtained becomes fragile, and various properties such as the Izod impact and bending strength properties sometimes become insufficient. Meanwhile, when the molecular weight exceeds 70000, melt viscosity of the polycarbonate resin becomes too high, resulting in the process difficulty. Note that the molecular weight can be controlled by changing a polymerization time in a polymerization reaction in the production method to be described below in detail. If there is an insoluble component when the given resin composition is dissolved in chloroform, the insoluble component is filterated by a membrane filter or the like, and an obtained solution of the soluble content is served for the GPC measurement. In such a way, the molecular weight of such polycarbonate resin is measured.

### (Resin composition)

The resin composition of the present invention is the one in which the inorganic oxide fine particles are dispersed in the polycarbonate resin matrix bonded through the connecting groups of the aliphatic ether type represented by the following general formula (1): 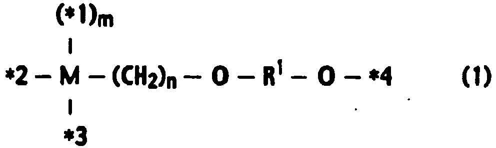 wherein M represents a tri- or tetravalent metal element capable of bonding to surfaces of the inorganic oxide fine particles; m is 0 or 1; n is an integer of 2 to 8 indicating the number of methylene groups in a chain; R¹ represents an aliphatic group derived either from an epoxy group or a glycidyl group and having either a hydroxyl group or an alkylene hydroxyl group linked directly to the straight chain of 2 to 8 carbon atoms and both terminals of which are bonded to two oxygen atoms adjacent thereto; at least one of *1-, *2- and *3- is a bonding species capable of bonding to the surfaces of the inorganic oxide fine particles, and at least one of the *1-, *2- and *3- is bonded to the surfaces of the inorganic oxide fine particles; and *4- represents a bond with the polycarbonate molecule.

An upper limit of the integer n in the general formula (1) is preferably 6, more preferably, 4, in order to prevent a thermal deformation temperature of the resin composition of the present invention from being decreased to an extreme. A value of the most preferable integer n is 3. Because of the same reason, an upper limit of the number of carbon atoms of the straight chain formed by connecting the carbon atoms contained in R¹ in the genera formula (1) to each other is preferably 6, more preferably, 4. A value of the most preferable integer n is 3. When these two types of numeric values are smaller than the above-described ranges, a deterioration of thermal degradability and a decrease of the mechanical strength or the melt fluidity sometimes occur.

There are no limitations on means for forming the connecting groups of the aliphatic ether type represented by the general formula (1). However, it is preferable to utilize reactivity of the epoxy groups. Specifically, the surface layers having the epoxy groups are provided on the surfaces of the inorganic oxide fine particles, and the epoxy groups are reacted with the polycarbonate rein or the raw material thereof. More specifically, this reaction is thought to be a reaction where terminal hydroxyl groups of the polycarbonate resin or hydroxyl groups of the diols as the raw material thereof nucleophilically attack the epoxy groups and make the rings thereof open. The connecting groups of the general formula (1), which are formed by the reaction, become as in the following formula (2) or (3).

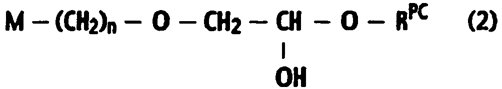

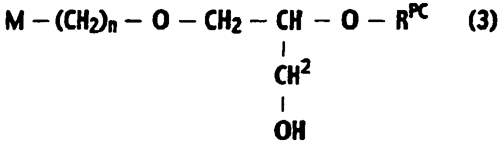

Which of structures represented in the above formulas (2) and (3) the connecting groups have depends on which of the two carbon atoms constructing each epoxy group the hydroxyl group of the diols nucleophilically attack. An oxygen atom of the epoxy group becomes an oxygen atom to which R^{pc} is adjacent.

In the formulas (2) and (3), the case where the integer n is 3 is the most preferable. What gives such a connecting group is the one containing the 3-glycidoxypropyl group as the most preferable one among alkoxysilane compounds containing the above-described glycidyl groups, and the connecting group is given in the case where the inorganic oxide fine particles are subjected to the surface treatment.

A feature of the resin composition of the present invention is in that the above-described chloroform-insoluble component of the resin composition is the inorganic oxide fine particles formed by connecting the polycarbonate fine particles through the connecting groups. This fact can be confirmed by the following analysis. Specifically, in order to completely remove the organic component such as free polycarbonate remaining in the chloroform-insoluble component, for example, chloroform washing using a Soxhlet extractor or removal of a supernatant fluid by centrifugal separation are repeated. A thermogravimetric analysis is performed for a solid residue remaining after purifying the chloroform-insoluble component by the above-described operation. Then, a thermal weight reduction is observed, which is derived from the polycarbonate molecules connected to the surfaces of the inorganic oxide fine particles through the connecting groups (hereinafter, such polycarbonate molecules are sometimes described as "surface-fixed polycarbonate molecules"). The existence of residues of the diols such as bisphenols, the carbonate bond, the above-described connecting groups, and the like is confirmed by an analysis of a decomposed fragment by a mass analysis, and thus it is understood that the polycarbonate molecules are the ones formed by connecting the above-described thermally reduced component through the connecting groups.

A quantity of the surface-fixed polycarbonate fine particles is usually 1 to 70 wt% of the purified chloroform-insoluble component, that is, of the solid residue. In terms of dispersibility of the inorganic oxide fine particles in the resin composition, a lower limit value of the quantity is preferably 5 wt%, more preferably, 10 wt%. Meanwhile, in terms of preventing a significant increase of the melt viscosity of the resin composition, an upper limit value of the quantity is preferably 60 wt%, more preferably, 50 wt%.

For example, such a quantity of the surface-fixed polycarbonate fine particles is controllable by a quantity of the surface layers having the epoxy groups connected in advance to the surfaces of the inorganic oxide fine particles. When excessive epoxy groups are contained in the inorganic oxide fine particles, such excessive epoxy groups generate the surface-fixed polycarbonate fine particles excessively, and a part thereof sometimes crosslinks the inorganic oxide fine particle and the inorganic oxide fine particle. In this case, there is an apprehension that a coarse gel component is generated. Hence, in order to prevent such a coarse gel component from being generated and to ensure the dispersibility of the inorganic oxide fine particles, it is preferable to control the quantity of the surface-fixed polycarbonate molecules within the above-described range.

In the resin composition of the present invention, a linear expansion coefficient thereof when the temperature is increased from 30°C to 80°C becomes 30 to 60 ppm/K owing to an effect of containing a predetermined quantity of the inorganic oxide fine particles. It is preferable that a value of the linear expansion coefficient be as small as possible in terms of the object of the present invention. An upper limit of the value is preferably 50 ppm/K, and in terms of the transparency, a lower limit of the value is preferably 35 ppm/K, more preferably 40 ppm/K. Note that a linear expansion coefficient of usual aromatic polycarbonate resin is approximately 70 ppm/K. Measurement of the linear expansion coefficient is performed by thermomechanical analysis (TMA) or dilatometer measurement at a temperature increase rate of 5°C/min for the given aromatic polycarbonate resin composition, which is molded into a cylindrical molded body having a bottom surface with a diameter of 5 mm and a height of 10mm.

Moreover, it is preferable to set the content of the inorganic oxide fine particles in the resin composition so as to be settled within a range of 5 wt% to 70 wt%. When the content is less than 5 wt%, various properties such as the mechanical strength of the resin composition become difficult to be enhanced. When the content exceeds 70 wt%, not only an increase of a specific gravity of the resin composition becomes unignorable, but also a cost disadvantage is brought. Moreover, the decrease of the impact strength also becomes unignorable. A lower limit of the content is preferably 10 wt% or more, more preferably, 15 wt% or more. Meanwhile, an upper limit of the content is preferably 60 wt% or less, more preferably, 50 wt% or less.

The content of the inorganic oxide fine particles in the composition of the present invention is measured by the thermal weight reduction measured by the thermogravimetric analysis in the air, and such content measurement is performed by a commercially available thermogravimetric analyzer (TG-DTA) in such a manner that the temperature is increased from the room temperature to 600°C for 60 minutes, and maintained at 600°C for 60 minutes.

As described above, according to the present invention, the polycarbonate resin is used as the base material, the inorganic oxide fine particles are uniformly dispersed stably in the polycarbonate resin by the bonding through the connecting groups of the aliphatic ether type, and further, the primary particle diameter of the inorganic oxide fine particles is 380 nm or less. Owing to a synergy effect of these factors, the resin composition can be obtained, which is excellent in mechanical strength such as the rigidity and the impact resistance, surface hardness, thermal dimensional stability, and transparency, and can be used as the practical organic glass such as the window glass.

### (Production of resin composition)

The resin composition of the present invention includes the steps of: forming surface layers having epoxy groups on inorganic oxide fine particles having an average primary particle diameter of 380 nm or less by using connecting groups of an aliphatic ether type represented by the following general formula (1); mixing the inorganic oxide fine particles on which the surface layers having the epoxy groups are formed with monomer as a raw material of polycarbonate molecules, thereby obtaining a mixture; and heating the mixture in a temperature range of 150 to 350°C: 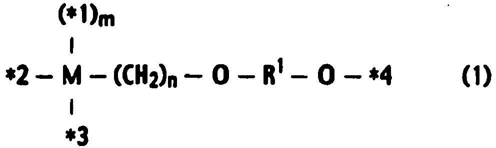 wherein M represents a tri- or tetravalent metal element capable of bonding to surfaces of the inorganic oxide fine particles; m is 0 or 1; n is an integer of 2 to 8 indicating the number of methylene groups in a chain; R¹ represents an aliphatic group derived either from an epoxy group or a glycidyl group and having either a hydroxyl group or an alkylene hydroxyl group linked directly to the straight chain of 2 to 8 carbon atoms and both terminals of which are bonded to two oxygen atoms adjacent thereto; at least one of *1-, *2- and *3- is a bonding species capable of bonding to the surfaces of the inorganic oxide fine particles, and at least one of the *1-, *2- and *3- is bonded to the surfaces of the inorganic oxide fine particles; and *4- represents a bond with the polycarbonate molecule.

For example, the inorganic oxide fine particles on which the surface layers having the epoxy groups are formed as described above are mixed with the monomer as the raw material of the polycarbonate molecules, thereby obtaining a mixture, and the resultant mixture is polymerized by heating. In such a way, the resin composition can be suitably produced. The polymerization in this case is melt polymerization by the ester exchange method. By the melt polymerization by the ester exchange method, the inorganic oxide fine particles are covalently bonded to the polycarbonate molecules through the surface layers, and the target resin composition dispersed in the polycarbonate resin can be obtained. According to needs, the inorganic oxide fine particles may be added during the polymerization reaction and a melting/kneading step at the time of pelleting.

Note that, in the present invention, the ester exchange method is used in the case of synthesizing the polycarbonate resin, and accordingly, predetermined dicarbonate compound and diol compound are used as the monomer.

The dicarbonate compound is selected from dialkyl carbonate, dicycloalkyl carbonate, and diaryl carbonate. Among them, diaryl carbonate is preferable. Diphenyl carbonate is particularly preferable.

Moreover, the diol compound for use in the present invention is selected from straight chain aliphatic diol, cycloaliphatic diol, and aromatic diol. From a viewpoint of the physical property of the composition and the availability, it is preferable that the diol compound be bisphenolic aromatic diol.

As the bisphenolic aromatic diol, specifically, there can be illustrated bis(4-hydroxyphenyl)methane, bis(4-hydroxyphenyl)ketone, 1,1-bis(4-hydroxyphenyl)ethane, 2,2-bis(4-hydroxyphenyl)propane (commonly called "bisphenol A"), 2,2-bis(4-hydroxyphenyl)butane, 1,1-bis(4-hydroxyphenyl)cyclohexane (commonly called "bisphenol Z"), 2,2-bis(4-hydroxy-3,5-dichlorophenyl)propane, 2,2-bis(4-hydroxy-3-chloropheyl)propane, 2,2-bis(4-hydroxy-3-methylphenyl)propane, bis(4-hydroxyphenyl)diphenylmethane, and 4,4-dihydroxyphenyl. Note that two types or more of these can be mixed together for use. Bisphenol A is particularly preferable.

Note that, preferably, in a forming process of the above-described polymerization reaction solution, the monomer is covalently bonded to the surfaces of the inorganic oxide fine particles, and the intermediate of the resin composition is thereby formed. In this case, the polycondensation reaction progresses by taking, as cores, the inorganic oxide fine particles. Accordingly, uniform dispersibility of the inorganic oxide fine particles in the resin composition finally obtained is enhanced, and in addition, stronger covalent bond is formed between the inorganic oxide fine particles and the polycarbonate resin, which are described above, through the surface layers. Hence, the various properties such as the mechanical strength of the target resin composition can be further enhanced.

As the monomer covalently bonded to the surfaces of the inorganic oxide fine particles, either the dicabomate compound or the diol compound, which are described above, may be used. In order to generate a sufficient polymerization reaction by the ester exchange method, it is preferable that the monomer be the diol compound. Moreover, since bisphenol A is preferable as the diol compound, it is preferable that bisphenol A be covalently bonded to the surfaces of the inorganic oxide fine particles to compose the intermediate of the resin composition.

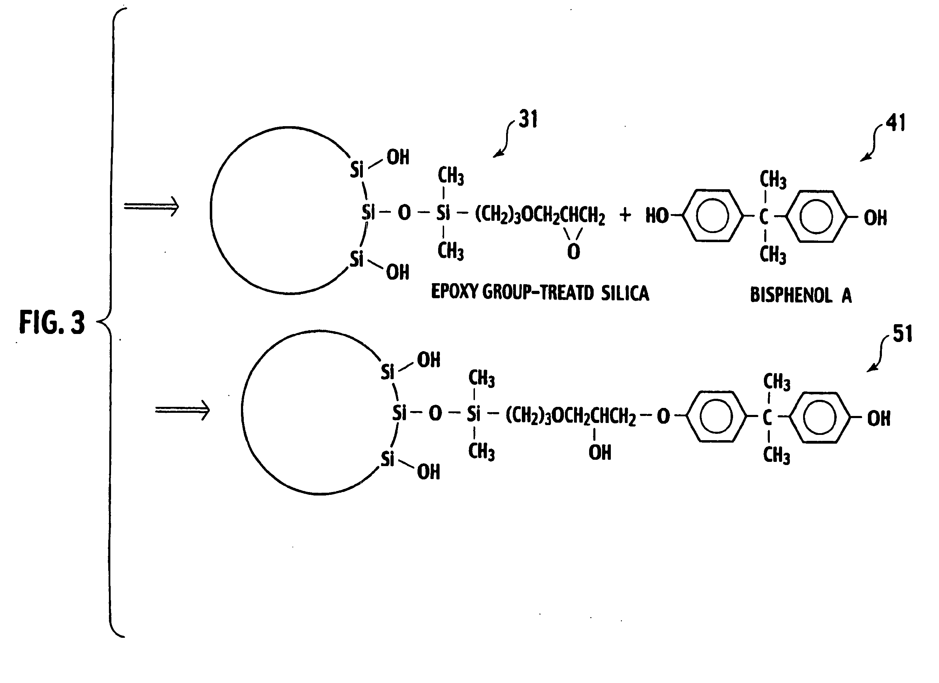

Next, a description will be made of a specific example of the method for producing the resin composition through the above-described intermediate of the resin composition by using FIG 1, FIG 3, and FIG 4. First, the epoxy group-treated silica 31 shown in FIG 3, on which the surface layers having the epoxy groups are formed, is compounded and molten with the bisphenol A 41. Then, a molten solution thus obtained is heated at a temperature of, for example, 160 to 250°C. In such a way, there is obtained the intermediate of the resin composition, in which bisphenol A is covalently bonded to the surface of the epoxy group-treated silica 31 though the connecting group by the addition reaction, that is, the silica/BPA compound 51. Subsequently, necessary quantities of, for example, the diphenyl carbonate 61 as the dicarbonate compound and the bisphenol A 62 are additionally compounded into the molten solution, thereby forming a polymerization reaction solution. Then, the polymerization reaction solution is heated, for example, at 200°C to 300°C under a reduced-pressure condition of 100 mmHg or less, preferably, 10 mmHg or less, and the condensation polymerization reaction by the ester exchange method is implemented to generate the polycarbonate, thereby obtaining the resin composition 72.

Moreover, in the present invention, in order to accelerate the condensation polymerization reaction, an alkaline metal catalyst may be added to the polymerization reaction solution. A preferable one just needs to be appropriately selected as the catalyst. As the catalyst, there can be illustrated: hydroxides of alkaline metals, for example, lithium hydroxide, sodium hydroxide, potassium hydroxide, rubidium hydroxide, and cesium hydroxide; hydroxides of alkaline earth metals, for example, magnesium hydroxide, calcium hydroxide, strontium hydroxide, and barium hydroxide; carbonates of alkaline metals, for example, lithium carbonate, sodium carbonate, potassium carbonate, rubidium carbonate, and cesium carbonate; carbonates of alkaline earth metals, for example, magnesium carbonate, calcium carbonate, strontium carbonate, and barium carbonate; and the like. Among them, preferable are: the hydroxides of the alkaline metals, such as lithium hydroxide, sodium hydroxide, potassium hydroxide, rubidium hydroxide, and cesium hydroxide; and the carbonates of the alkaline metals, such as lithium carbonate, sodium carbonate, potassium carbonate, rubidium carbonate, and cesium carbonate.

### (Molded body and part)

The resin composition obtained through the above-described process maintains thermal moldability as good as that of a single body of the resin. The resin composition can be processed into a molded article with a various (large or small) size, which has a curved surface shape, through a molding step such as melt extrusion molding, injection molding, and blow molding.

The resin composition realizes the enhancement of the rigidity thereof without sacrificing the transparency and the impact strength, and is also equipped with characteristics that the thermal expansion coefficient is low enough to make it possible to suppress deflection thereof when the temperature is high. Accordingly, the resin composition is suitable for a member for which these functions are required. It can be said that the resin composition is a member suitable, for example, for materials as an automotive interior material for use in a transparent cover of a dashboard, as an automotive exterior material for use in a window glass, a headlamp, a sunroof, and combination lamp covers, and further as transparent member/accessory/furniture for use in an electric appliance and a house.

### EXAMPLE

Examples will be mentioned below; however, the present invention is not limited to these. Note that, in each of the examples and the comparative examples, which are shown below, overall light transmission, a dispersed state observed by a transmission electron microscope, bending strength, bending modulus, a linear expansion coefficient were evaluated in the following manner.
- Overall light transmission: measured by a haze meter (HM-65: made by Murakami Chromatic Research Institute)
- Dispersed state in transmission electron microscope: observed in magnification of 80000 times by using H-800 made by Hitachi, Ltd., where silica fine particles are observed to be black and resin is observed to be white
- Bending strength, bending modulus: measured by an autograph (DCS-10T: made by Shimadzu Corporation)
- Linear expansion coefficient: measured by a thermomechanical analyzer (TMA120C: made by Seiko Instruments and Electronics, Ltd.)
- Impact strength: measured in conformity with Izod impact strength test (with notch) (ASTMD256)

### (Example 1)

### <Formation of epoxy group-surface layer on silica fine particles>

Aerosil silica (AEROSIL: made by Nippon Aerosil Co., Ltd.; average primary particle diameter: approximately 20 nm) was used as the silica fine particles, the silica fine particles were surface-treated by (3-glycidoxypropyl)dimethylethoxysilane, and the addition reaction of the epoxy groups was performed for the surfaces of the silica fine particles. Note that the surface modification ratio in the silica fine particles was set at 25%.

### <Production of resin composition>

The silica fine particles were compounded with the molten solution of bisphenol A, and the molten solution was heated and agitated. Thereafter, equal moles of bisphenol A and diphenyl carbonate were compounded into the molten solution, and a polymerization reaction solution was formed. Thereafter, the polymerization reaction solution was heated to approximately 180°C to 230°C under a reduced-pressure atmosphere to distill phenol out, and the polymerization reaction by the ester exchange method was progressed. Note that a compounded quantity of the silica fine particles with respect to the resin composition was set at 20 wt%. Subsequently, the obtained resin composition was dried and pulverized, and a sheet-like molded article was thereby obtained by hot-press molding. Test results of the overall light transmission, the dispersed state in the transmission electron microscope, the bending strength, the bending modulus, the linear expansion coefficient, and the Izod impact for the molded article are shown in Table 2.

### (Example 2)

Spherical colloidal silica (Snowtex ST: made by Nissan Chemical Industries, Ltd.; average primary particle diameter: approximately 20 nm) was used as the silica fine particles, the silica fine particles were surface-treated by (3-glycidoxypropyl)dimethylethoxysilane, and the addition reaction of the epoxy groups was performed for the surfaces of the silica fine particles. Note that the surface modification ratio of the silica fine particles was set at 50%. Subsequently, the polymerization reaction by the ester exchange method was implemented in a similar way to Example 1, and a resin composition was thereby produced. A compounded quantity of the silica fine particles with respect to the resin composition was set at 20 wt%.

Subsequently, a sheet-like molded article was formed of the resin composition in a similar way to Example 1, and the various tests of the overall light transmission, the dispersed state in the transmission electron microscope, the bending strength, the bending modulus, the linear expansion coefficient, and the Izod impact were implemented for the molded article. Results of these are shown in Table 2.

### (Example 3)

The surface treatment was performed for the silica fine particles in a similar way to Example 2 except that the average primary particle diameter of the silica fine particles was set at 5 nm and that the surface modification ratio of the silica fine particles was set at 25%. Moreover, the polymerization reaction by the ester exchange method was implemented, and the resin composition was thereby obtained. Subsequently, a sheet-like molded body was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 2.

### (Example 4)

The surface treatment of the silica fine particles was performed in a similar way to Example 2, and further, the polymerization reaction by the ester exchange method was implemented, and the resin composition was obtained. However, the surface modification ratio of the silica fine particles was set at 25%, and a reaction time of the polymerization reaction was adjusted so that a molecular weight of the polycarbonate resin constructing the resin composition could be 10000.

Subsequently, a sheet-like molded body was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 2.

### (Example 5)

The surface treatment of the silica fine particles was performed in a similar way to Example 2, and further, the polymerization reaction by the ester exchange method was implemented, and the resin composition was obtained. However, the surface modification ratio of the silica fine particles was set at 25%, and a reaction time of the polymerization reaction was adjusted so that a molecular weight of the polycarbonate resin constructing the resin composition could be 5000.

Subsequently, a sheet-like molded body was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 2.

### (Example 6)

The surface treatment of the silica fine particles was performed in a similar way to Example 2, and further, the polymerization reaction by the ester exchange method was implemented, and the resin composition was obtained. However, the surface modification ratio of the silica fine particles was set at 25%, and a reaction time of the polymerization reaction was adjusted so that a molecular weight of the polycarbonate resin constructing the resin composition could be 20000.

Subsequently, a sheet-like molded body was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 2.

### (Example 7)

The surface treatment was performed for the silica fine particles in a similar way to Example 2 except that the average primary particle diameter of the silica fine particles was set at 50 nm and that the surface modification ratio of the silica fine particles was set at 25%. Moreover, the polymerization reaction by the ester exchange method was implemented, and the resin composition was thereby obtained. Subsequently, a sheet-like molded body was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 2.

### (Example 8)

The surface treatment was performed for the silica fine particles in a similar way to Example 2 except that the surface modification ratio of the silica fine particles was set at 5%. Moreover, the polymerization reaction by the ester exchange method was implemented, and the resin composition was thereby obtained. Subsequently, a sheet-like molded body was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 2.

### (Example 9)

Chain colloidal silica (Snowtex ST-UP: made by Nissan Chemical Industries, Ltd.) was used as the silica fine particles, the silica fine particles were surface-treated by (3-glycidoxypropyl)dimethylethoxysilane, and the addition reaction of the epoxy groups was performed for the surfaces of the silica fine particles. Note that the surface modification ratio of the silica fine particles was set at 25%. Subsequently, the polymerization reaction by the ester exchange method was implemented in a similar way to Example 1, and a resin composition was thereby produced. A compounded quantity of the silica fine particles with respect to the resin composition was set at 20 wt%.

Subsequently, a sheet-like molded article was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 2.

### (Example 10)

Dumbbell colloidal silica (Snowtex PS: made by Nissan Chemical Industries, Ltd.) was used as the silica fine particles, the silica fine particles were surface-treated by (3-glycidoxypropyl)dimethylethoxysilane, and the addition reaction of the epoxy groups was performed for the surfaces of the silica fine particles. Note that the surface modification ratio of the silica fine particles was set at 25%. Subsequently, the polymerization reaction by the ester exchange method was implemented in a similar way to Example 1, and a resin composition was thereby produced. A compounded quantity of the silica fine particles with respect to the resin composition was set at 20 wt%.

Subsequently, a sheet-like molded article was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 2.

### (Comparative example 1)

The spherical colloidal silica (Snowtex ST: made by Nissan Chemical Industries, Ltd.; average primary particle diameter: approximately 20 nm) was used as the silica fine particles. The polymerization reaction by the ester exchange method, which was similar to Example 1, was implemented for the silica fine particles without performing the surface treatment therefor, and a resin composition was thereby obtained. Note that a compounded quantity of the silica fine particles with respect to the resin composition was set at 20 wt%. Subsequently, a sheet-like molded article was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 3.

### (Comparative example 2)

The chain colloidal silica (Snowtex ST-UP: made by Nissan Chemical Industries, Ltd.) was used as the silica fine particles. The polymerization reaction by the ester exchange method, which was similar to Example 1, was implemented for the silica fine particles without performing the surface treatment therefor, and a resin composition was thereby obtained. Note that a compounded quantity of the silica fine particles with respect to the resin composition was set at 20 wt%. Subsequently, a sheet-like molded article was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 3.

### (Comparative example 3)

The dumbbell colloidal silica (Snowtex PS: made by Nissan Chemical Industries, Ltd.) was used as the silica fine particles. The polymerization reaction by the ester exchange method, which was similar to Example 1, was implemented for the silica fine particles without performing the surface treatment therefor, and a resin composition was thereby obtained. Note that a compounded quantity of the silica fine particles with respect to the resin composition was set at 20 wt%. Subsequently, a sheet-like molded article was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 3.

### (Comparative example 4)

The spherical colloidal silica (Snowtex ST: made by Nissan Chemical Industries, Ltd.; average primary particle diameter: approximately 20 nm) was used as the silica fine particles. While the silica fine particles were being kept away from the surface treatment, 30 g thereof was molten and mixed with 120 g of polycarbonate resin (Iupilon S2000: made by Mitsubishi Engineering-Plastics Corporation) by a small kneader, and a resin composition was obtained. A sheet-like molded article was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 3.

### (Comparative example 5)

The chain colloidal silica (Snowtex ST-UP: made by Nissan Chemical Industries, Ltd.) was used as the silica fine particles. While the silica fine particles were being kept away from the surface treatment, 30 g thereof was molten and mixed with 120 g of the polycarbonate resin (Iupilon S2000: made by Mitsubishi Engineering-Plastics Corporation) by the small kneader, and a resin composition was obtained. A sheet-like molded article was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 3.

### (Comparative example 6)

The dumbbell colloidal silica (Snowtex PS: made by Nissan Chemical Industries, Ltd.) was used as the silica fine particles. While the silica fine particles were being kept away from the surface treatment, 30 g thereof was molten and mixed with 120 g of the polycarbonate resin (Iupilon S2000: made by Mitsubishi Engineering-Plastics Corporation) by the small kneader, and a resin composition was obtained. A sheet-like molded article was formed of the resin composition in a similar way to Example 1, and the various tests including the overall light transmission, the dispersed state in the transmission electron microscope, the bending strength, the bending modulus, the linear expansion coefficient, and the Izod impact were implemented for the molded article. Results of these are shown in Table 3.

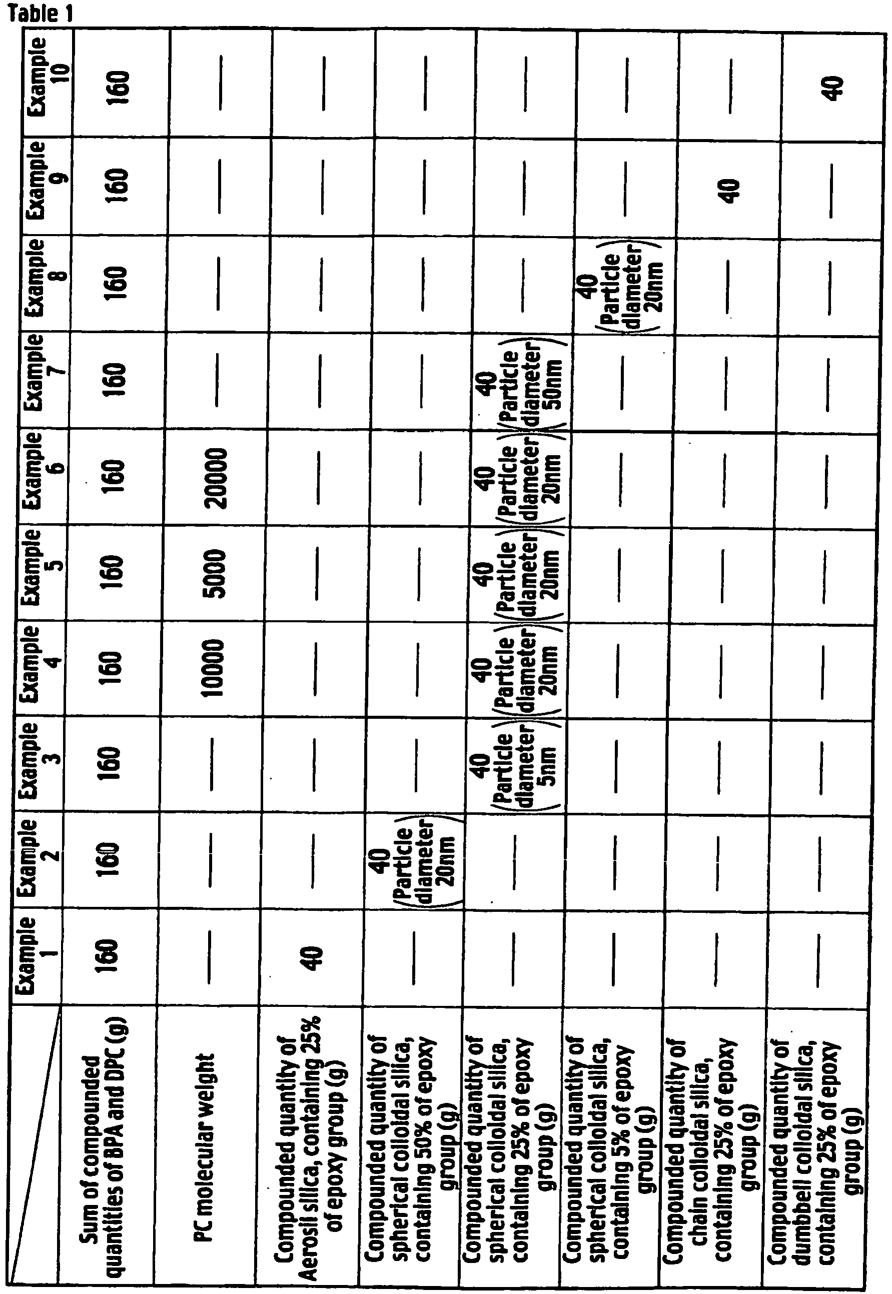

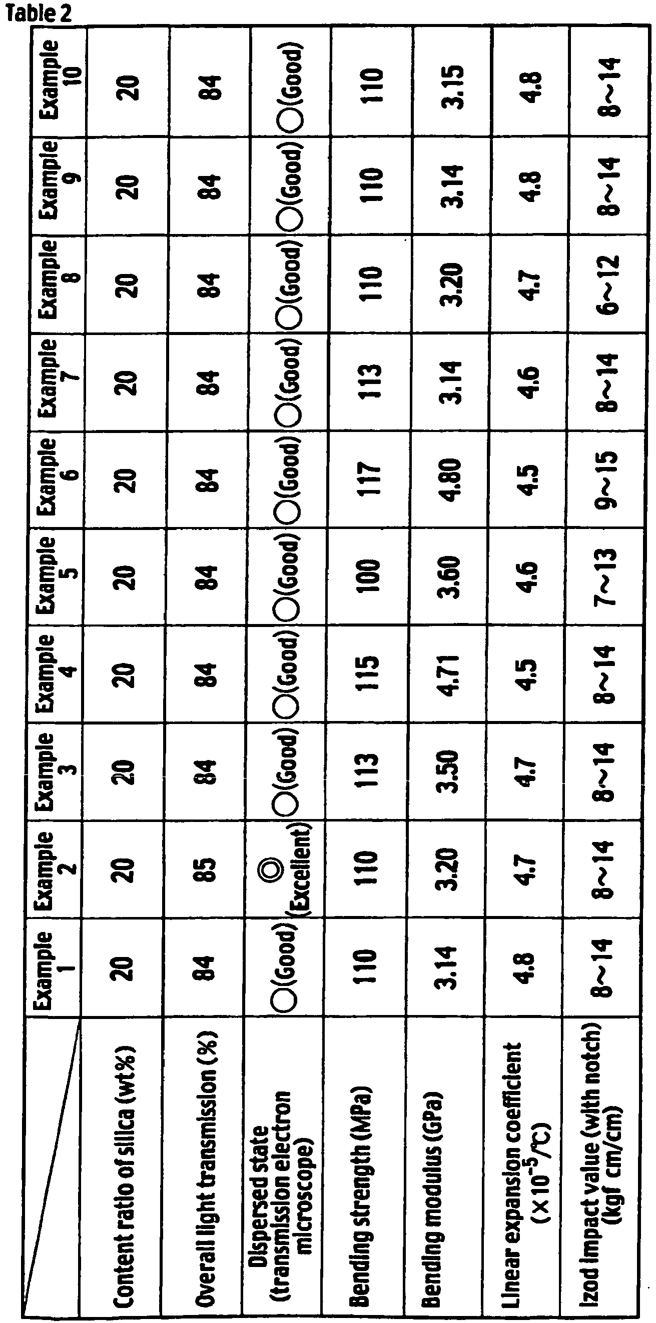

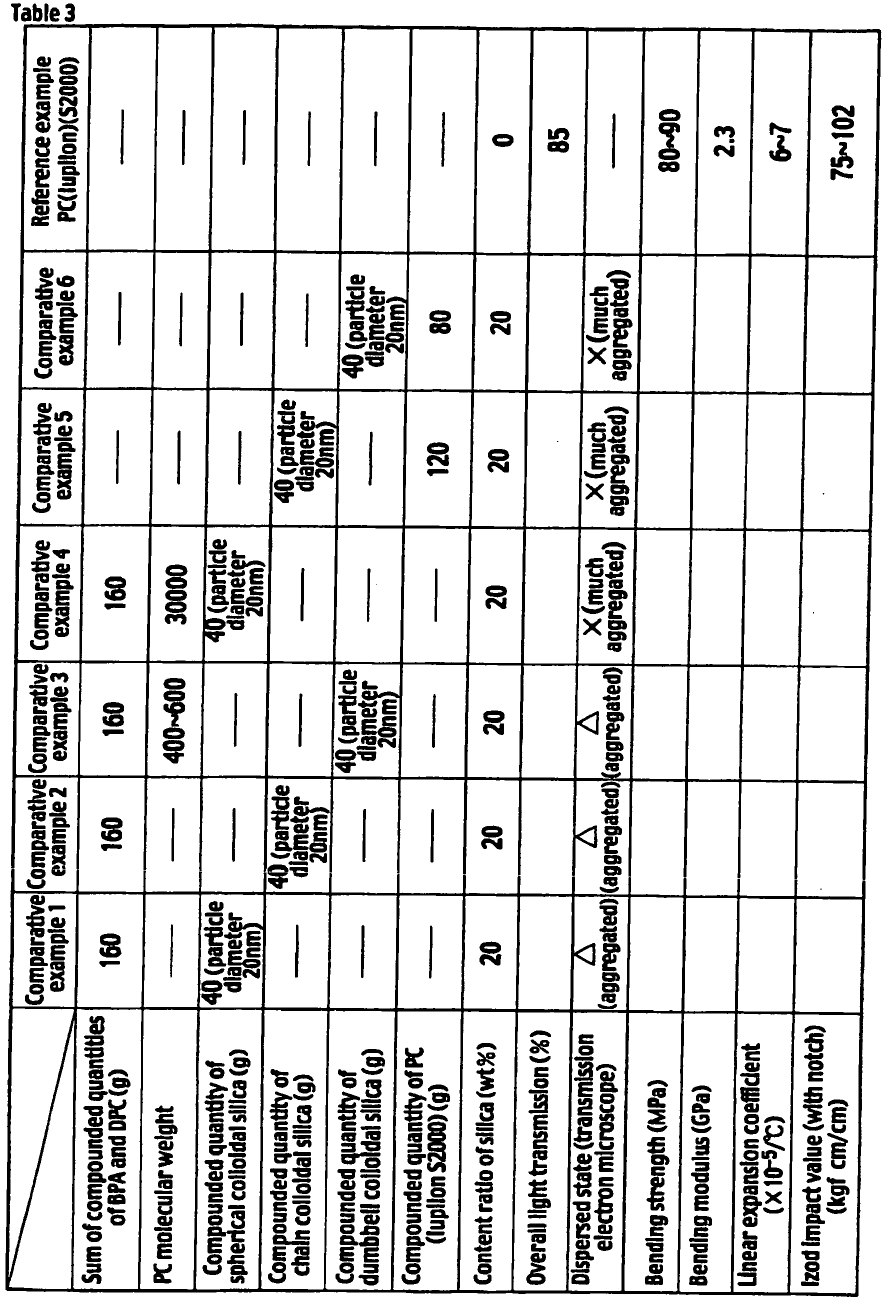

As apparent from Tables 2 and 3, it is understood that, in comparison with polycarbonate resin (Iupilon S2000: made by Mitsubishi Engineering-Plastics Corporation) shown as a reference value, in the resin compositions of the present invention, which are according to the examples, the bending strength and the bending modulus are enhanced and the linear expansion coefficient is decreased while the transparency is being maintained. Meanwhile, it is understood that, in comparison with the resin compositions according to the examples, in the resin compositions according to the comparative examples, the increases of the bending strength and the bending modulus are insufficient, and the decrease of the linear expansion coefficient is insufficient. In particular, it is understood that, as shown in Comparative examples 4 to 6, when the silica fine particles are compounded with the polycarbonate rein by the kneader, the bending strength is lower, and the decrease of the linear expansion coefficient is more insufficient.

### (Comparative example 7)

The following synthesis operation was performed in conformity with the description of Japanese Patent Laid-Open Publication No. 2000-327930. The 70 g of bisphenol A polycarbonate diol with a number average molecular weight of 4000 measured by the GPC using chloroform as a developing solvent and with a hydroxyl group equivalent of 1.8 was dissolved into 500 mL of chloroform. To a resultant solution, 13 g of 3-isocyanatepropyltriethoxysilane was added, and a resultant was heated for 10 hours under a reflux, and then cooled to the room temperature. Such a reaction solution was dropped into 7L of methanol to precipitate a product. The product was filterated and washed by methanol, followed by drying under a reduced pressure. It was found out by proton NMR that the product was polycarbonate in which both terminals are triethoxysililated. An alkoxysilyl group equivalent of the product was 1.8, and a number average molecular weight thereof was 4600.

Subsequently, 0.4 g of the both terminal triethoxysilylated polycarbonate with a number average molecular weight of 4600 and 0.2 g of tetraethoxysilane were dissolved into 10 mL of tetrahydrofuran. To a resultant solution, 0.1 g of 1 Normal hydrochloric acid was added, and a resultant was agitated at the room temperature for one hour. Such a reaction solution was dropped into 40 mL of dichloromethane solution of 2 g of Iupilon S2000 as the bisphenol A polycarbonate resin made by Mitsubishi Engineering-Plastics Corporation, which was used in the comparative examples. A resultant solution was kept on being agitated for one hour, and condensed under a reduced pressure, thereby obtaining a resin composition. This resin composition was pulverized, and dried under a vacuum condition at 120°C over a night. Thereafter, the resin composition was subjected to melt extrusion at 280°C by using a micro kneader made by Imoto Machinery Co., Ltd. Then, an opaque strand was obtained, and a surface thereof was rough without smoothness. From this fact, it was found out that a large quantity of the coarse gel component was contained.

### (Comparative example 8)

The following synthesis operation was performed in conformity with the description of Japanese Patent Laid-Open Publication No. 2000-327930. A mixture of 15 g of the both terminal triethoxysilylated polycarbonate with a number average molecular weight of 4600, which was obtained by the synthesis at the former stage in Comparative example 7, and of 15 g of tetraethoxysilane was mixed at 200°C for 10 minutes by using the Laboplasto Mill 10100 made by Shimadzu Corporation, on which a segment mixer with an internal capacity of 60 mL is mounted. Next, 20 g of Iupilon S2000 as the bisphenol A polycarbonate resin used in Comparative example 7 was added to the mixture, and a resultant was further molten and kneaded at 280°C for 10 minutes, thereby obtaining a composite material. During the melting and the kneading at 280°C, a significant viscosity increase occurred, and moreover, the composite material thus obtained was an opaque one, and it was found out that a large quantity of the coarse gel component was contained.

The present invention has been described in detail based on the embodiment of the invention while mentioning the specific examples. However, the present invention is not limited to the above-described contents, and every modification and alteration are possible without departing from the scope of the present invention.

For example, to the polycarbonate resin composition of the present invention, according to needs, there can be added: an antioxidant and a thermal stabilizer, which include, for example, hindered phenols, hydroquinones, tioethers, phosphites, substituted compounds thereof, and combinations thereof; an ultraviolet absorber, such as resorcinol, salicylate, benzotriazol, and benzophenone; a lubricant; a parting agent, such as silicon resin, montanic acid, and salts thereof, stearic acid and salt thereof, stearyl alcohol, and stearyl amide; a colorant including a dyestuff, such as nitrisin, and a pigment, such as cadmium sulfide and phthalocyanine; an adsorbing additives, such as silicon oil; a crystal nucleus agent such as talc and kaolin; and the like. These additives can be added singly or in an appropriate combination.

The entire contents of Japanese Patent Application No. 2004-196973 (filed on July 2, 2004) are incorporated herein by reference.

### INDUSTRIAL APPLICABILITY

The resin composition of the present invention realizes the enhancement of the rigidity thereof without sacrificing the transparency and the impact strength, and is also equipped with the characteristics that the thermal expansion coefficient is low enough to make it possible to suppress the deflection thereof when the temperature is high. Accordingly, the resin composition is suitable for the member for which these functions are required, and for example, can be used for the materials as the automotive interior material for use in the transparent cover of the dashboard, as the automotive exterior material for use in the window glass, the headlamp, the sunroof, and the combination lamp covers, and further as the transparent member/accessory/furniture for use in the electric appliance and the house.

## Claims

1. A thermoplastic resin composition containing polycarbonate molecules to which inorganic oxide fine particles are bonded through connecting groups of an aliphatic ether type represented by a following general formula 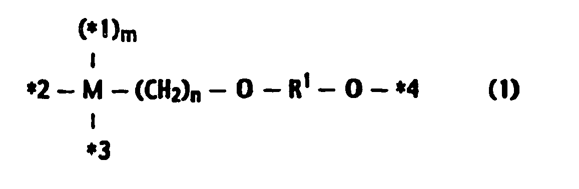 wherein M represents a tri- or tetravalent metal element capable of bonding to surfaces of the inorganic oxide fine particles; m is 0 or 1; n is an integer of 2 to 8 indicating the number of methylene groups in a chain; R¹ represents an aliphatic group derived either from an epoxy group or a glycidyl group and having either a hydroxyl group or an alkylene hydroxyl group linked directly to the straight chain of 2 to 8 carbon atoms, and both terminals of which are bonded to two oxygen atoms adjacent thereto; at least one of *1-, *2- and *3- is a bonding species capable of bonding to the surfaces of the inorganic oxide fine particles, and at least one of the *1-, *2- and *3- is bonded to the surfaces of the inorganic oxide fine particles; and *4- represents a bond with a polycarbonate molecule.

2. The resin composition according to claim 1, wherein the integer n is 3.

3. The resin composition according to claim 1, wherein the number of carbon atoms of the straight chain is 3.

4. The resin composition according to claim 1, wherein the inorganic oxide fine particles have an average primary particle diameter of 380 nm or less, are covalently bonded to the polycarbonate molecules through surface layers thereof including epoxy groups, and are dispersed.

5. The resin composition according to claim 1, wherein, in the inorganic oxide fine particles, a surface modification ratio by the epoxy groups is 5 to 50%.

6. The resin composition according to claim 1, wherein the inorganic oxide fine particles are formed of silica fine particles.

7. The resin composition according to claim 6, wherein the silica fine particles are colloidal silica.

8. The resin composition according to claim 6, wherein the silica fine particles have a spherical, dumbbell or chain shape.

9. The resin composition according to claim 1, wherein a compounded quantity of the inorganic oxide fine particles with respect to the resin composition is 5 wt% to 50 wt%.

10. The resin composition according to clam 1, wherein a weight average molecular weight of the polycarbonate molecules in conversion to polystyrene determined by GPC using chloroform at 40 °C is 800 to 20000.

11. The resin composition according to claim 1, wherein the polycarbonate molecule is an aromatic polycarbonate molecule.

12. A molded article formed of a thermoplastic resin composition according to any of the preceeding claims.

13. A method for producing a resin composition, comprising the steps of:
forming surface layers including epoxy groups on inorganic oxide fine particles having an average primary particle diameter of 380 nm or less by using connecting groups of an aliphatic ether type represented by a following general formula (1);
mixing the inorganic oxide fine particles on which the surface layers having the epoxy groups are formed with a monomer as a raw material of polycarbonate molecules, thereby obtaining a mixture; and
heating the mixture in a temperature range of 150 to 350°C: 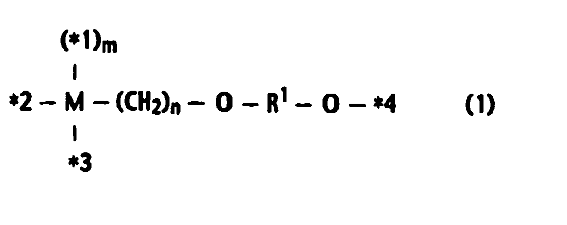 wherein M represents a tri- or tetravalent metal element capable of bonding to surfaces of the inorganic oxide fine particles; m is 0 or 1; n is an integer of 2 to 8 indicating the number of methylene groups in a chain; R¹ represents an aliphatic group derived either from an epoxy group or a glycidyl group and having either a hydroxyl group or an alkylene hydroxyl group linked directly to the straight chain of 2 to 8 carbon atoms, and both terminals of which are bonded to two oxygen atoms adjacent thereto; at least one of *1-, *2- and *3- is a bonding species capable of bonding to the surfaces of the inorganic oxide fine particles, and at least one of the *1-, *2- and *3- is bonded to the surfaces of the inorganic oxide fine particles; and *4- represents a bond with a polycarbonate molecule.

14. The method for producing a resin composition according to claim 13, wherein the step of obtaining the mixture includes the step of forming an intermediate of the resin composition by covalently bonding the monomer to the surface layers having the epoxy groups.

15. The method for producing a resin composition according to claim 14, wherein the monomer is 2,2-bis(4-hydroxyphenyl)propane.

16. An intermediate of a resin composition, wherein the intermediate includes inorganic oxide fine particles having a primary particle diameter of 380 nm or less, which are bonded to a connecting group of an aliphatic ether type represented by the following general formula: 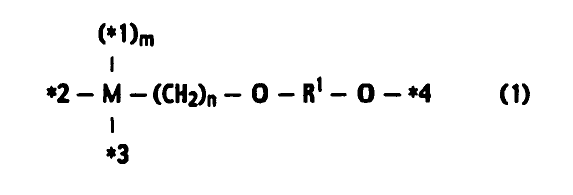 wherein M represents a tri- or tetravalent metal element capable of bonding to surfaces of the inorganic oxide fine particles; m is 0 or 1; n is an integer of 2 to 8 indicating the number of methylene groups in a chain; R¹ represents an aliphatic group derived either from an epoxy group or a glycidyl group and having either a hydroxyl group or an alkylene hydroxyl group linked directly to the straight chain of 2 to 8 carbon atoms, and both terminals of which are bonded to two oxygen atoms adjacent thereto; at least one of *1-, *2- and *3- is a bonding species capable of bonding to the surfaces of the inorganic oxide fine particles, and at least one of the *1-, *2- and *3- is bonded to the surfaces of the inorganic oxide fine particles; and *4- represents a bond with a monomer as a raw material of a polycarbonate molecule.

17. The intermediate of a resin composition according to claim 16, wherein, in the inorganic oxide fine particles, a surface modification ratio by the epoxy groups is 5 to 50 %.

18. The intermediate of a resin composition according to claim 16, wherein the inorganic oxide fine particles have a primary particle diameter of 5 nm to 200 nm.

19. The intermediate of a resin composition according to claim 16, wherein the inorganic oxide fine particles have a primary particle diameter of 5 nm to 100 nm.

20. The intermediate of a resin composition according to claim 16, wherein the inorganic oxide fine particles are formed of silica fine particles.

21. The intermediate of a resin composition according to claim 20, wherein the silica fine particles are colloidal silica.

22. The intermediate of a resin composition according to claim 21, wherein the silica fine particles have a spherical, dumbbell or chain shape.

## Patentansprüche

1. Thermoplastische Harzzusammensetzung enthaltend Polycarbonatmoleküle, an die feine anorganische Oxidpartikel durch Verbindungsgruppen vom Typ aliphatischer Ether gebunden sind, der durch folgende Formel dargestellt wird: 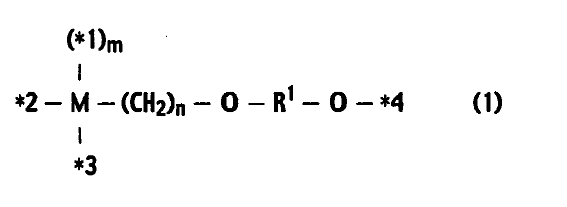 wobei M ein tri- oder tetravalentes Metallelement darstellt, das imstande ist an Oberflächen der feinen anorganischen Oxidpartikel zu binden; m 0 oder 1 ist; n eine ganze Zahl von 2 bis 8 ist, was die Anzahl an Methylengruppen in der Kette anzeigt; R¹ eine aliphatische Gruppe darstellt, die entweder von einer Epoxygruppe oder einer Glycidylgruppe abgeleitet ist und die entweder eine Hydroxylgruppe oder eine Alkylen-Hydroxlygruppe aufweist, die direkt an die gerade Kette von 2 bis 8 Kohlenstoffatomen gebunden ist, und von der beide Enden an zwei zu ihr benachbarte Sauerstoffatome gebunden sind; *1- und/oder *2- und/oder *3 eine Bindungspezies ist, die imstande ist an Oberflächen der feinen anorganischen Oxidpartikel zu binden und *1- und/oder *2- und/oder *3 an die Oberflächen der feinen anorganischen Oxidpartikel gebunden ist; und *4- eine Bindung zu dem Polycarbonatmolekül darstellt.

2. Harzzusammensetzung nach Anspruch 1, wobei die ganze Zahl n 3 ist.

3. Harzzusammensetzung nach Anspruch 1, wobei die Anzahl an Kohlenstoffatomen in der geraden Kette 3 ist.

4. Harzzusammensetzung nach Anspruch 1, wobei die feinen anorganischen Oxidpartikel einen mittleren primären Partikeldurchmesser von 380 nm oder weniger haben, kovalent durch die Oberflächenschichten der Polycarbonatmoleküle, die Epoxygruppen enthalten, an die Polycarbonatmoleküle gebunden sind und verteilt vorliegen.

5. Harzzusammensetzung nach Anspruch 1, wobei ein Anteil der Oberflächenmodifikation durch die Epoxygruppen in den feinen anorganischen Partikeln 5 bis 50% beträgt.

6. Harzzusammensetzung nach Anspruch 1, wobei die feinen anorganischen Partikel aus feinen Silicapartikeln gebildet sind.

7. Harzzusammensetzung nach Anspruch 6, wobei die feinen Silicapartikel kolloidales Silica sind.

8. Harzzusammensetzung nach Anspruch 6, wobei die feinen Silicapartikel eine kugelförmige, hantelförmige oder kettenförmige Form haben.

9. Harzzusammensetzung nach Anspruch 1, wobei eine eingearbeitete Menge an feinen anorganischen Partikeln bezogen auf die Harzzusammensetzung 5 Gew.-% bis 50 Gew.-% beträgt.

10. Harzzusammensetzung nach Anspruch 1, wobei ein Gewichtsmittel des Molekulargewichts der Polycarbonatmoleküle gemessen mittels GPC nach Kalibrierung mit Polystyrolstandards unter Verwendung von Chloroform bei 40 °C 800 bis 20000 beträgt.

11. Harzzusammensetzung nach Anspruch 1, wobei das Polycarbonatmolekül ein aromatisches Polycarbonatmolekül ist.

12. Gegossener Gegenstand, gebildet aus einer thermoplastischen Harzzusammensetzung nach einem der vorhergehenden Ansprüche.

13. Verfahren zur Herstellung einer Harzzusammensetzung, umfassend die Schritte:
Bilden von Oberflächenschichten, die Epoxygruppen enthalten auf feinen anorganischen Oxidpartikeln, die einen mittleren primären Partikeldurchmesser von 380 nm oder weniger aufweisen, unter Verwendung von Verbindungsgruppen vom Typ aliphatischer Ehter, der durch die folgende allgemeine Formel (1) dargestellt wird;
Mischen der feinen anorganische Oxidpartikel auf denen die Oberflächenschichten, die Epoxygruppen enthalten, gebildet sind, mit einem Monomer als Ausgangsmaterial der Polycarbonatmolekülen, wodurch eine Mischung erhalten wird; und
Erwärmen der Mischung in einem Temperaturbereich von 150 bis 350 °C: 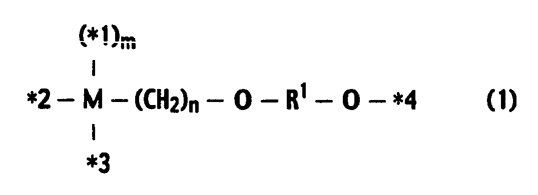 wobei M ein tri- oder tetravalentes Metallelement darstellt, das imstande ist an Oberflächen der feinen anorganischen Oxidpartikel zu binden; m 0 oder 1 ist; n eine ganze Zahl von 2 bis 8 ist, was die Anzahl an Methylengruppen in der Kette anzeigt; R¹ eine aliphatische Gruppe darstellt, die entweder von einer Epoxygruppe oder einer Glycidylgruppe abgeleitet ist und die entweder eine Hydroxylgruppe oder eine Alkylen-Hydroxlygruppe aufweist, die direkt an die gerade Kette von 2 bis 8 Kohlenstoffatomen gebunden ist, und von der beide Enden an zwei zu ihr benachbarte Sauerstoffatome gebunden sind; *1- und/oder *2- und/oder *3 eine Bindungspezies ist, die imstande ist an Oberflächen der feinen anorganischen Oxidpartikel zu binden und *1- und/oder *2- und/oder *3 an die Oberflächen der feinen anorganischen Oxidpartikel gebunden ist; und *4- eine Bindung zu dem Polycarbonatmolekül darstellt.

14. Verfahren zur Herstellung einer Harzzusammensetzung nach Anspruch 13, wobei der Schritt des Erhaltens der Mischung den Schritt des Bildens eines Zwischenproduktes der Harzzusammensetzung durch kovalentes Binden des Monomers an Oberflächenschichten, die Epoxygruppen aufweisen, umfasst.

15. Verfahren zur Herstellung einer Harzzusammensetzung nach Anspruch 14, wobei das Monomer 2,2-Bis(4-hydroxyphenyl)propan ist.

16. Zwischenprodukt einer Harzzusammensetzung, wobei das Zwischenprodukt feine anorganische Oxidpartikel mit einem primären Partikeldurchmesser von 380 nm oder weniger aufweist, die an eine Verbindungsgruppe vom Typ aliphatischer Ether, gebunden sind, die durch die folgende allgemeine Formel dargestellt wird: 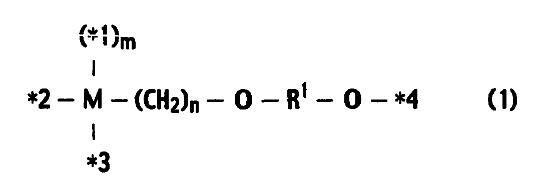 wobei M ein tri- oder tetravalentes Metallelement darstellt, das imstande ist an Oberflächen der feinen anorganischen Oxidpartikel zu binden; m 0 oder 1 ist; n eine ganze Zahl von 2 bis 8 ist, was die Anzahl an Methylengruppen in der Kette anzeigt; R¹ eine aliphatische Gruppe darstellt, die entweder von einer Epoxygruppe oder einer Glycidylgruppe abgeleitet ist und die entweder eine Hydroxylgruppe oder eine Alkylen-Hydroxlygruppe aufweist, die direkt an die gerade Kette von 2 bis 8 Kohlenstoffatomen gebunden ist, und von der beide Enden an zwei zu ihr benachbarte Sauerstoffatome gebunden sind; *1- und/oder *2- und/oder *3 eine Bindungspezies ist, die imstande ist an Oberflächen der feinen anorganischen Oxidpartikel zu binden und *1- und/oder *2- und/oder *3 an die Oberflächen der feinen anorganischen Oxidpartikel gebunden ist; und *4- eine Bindung zu dem Polycarbonatmolekül darstellt.

17. Zwischenprodukt einer Harzzusammensetzung nach Anspruch 16, wobei ein Anteil der Oberflächenmodifikation durch die Epoxygruppen in den feinen anorganischen Partikeln 5 bis 50% beträgt.

18. Zwischenprodukt einer Harzzusammensetzung nach Anspruch 16, wobei die feinen anorganischen Partikel einen primären Partikeldurchmesser von 5 nm bis 200 nm aufweisen.

19. Zwischenprodukt einer Harzzusammensetzung nach Anspruch 16, wobei die feinen anorganischen Partikel einen primären Partikeldurchmesser von 5 nm bis 100 nm aufweisen.

20. Zwischenprodukt einer Harzzusammensetzung nach Anspruch 16, wobei die feinen anorganischen Oxidpartikel aus feinen Silicapartikeln gebildet sind.

21. Zwischenprodukt einer Harzzusammensetzung nach Anspruch 20, wobei die feinen Silicapartikel kolloidales Silica sind.

22. Zwischenprodukt einer Harzzusammensetzung nach Anspruch 21, wobei die feinen Silicapartikel eine kugelförmige, hantelförmige oder kettenförmige Form haben.

## Revendications

1. Composition de résine thermoplastique contenant des molécules de polycarbonate auxquelles des particules fines d'oxyde inorganique sont liées par l'intermédiaire de groupes liants de type éther aliphatique représentés par la formule générale : 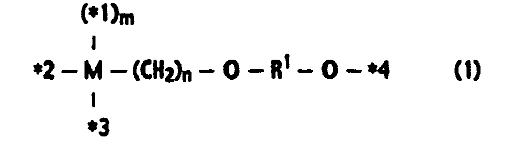 dans laquelle M représente un élément métallique tri- ou tétravalent capable de se lier aux surfaces des particules fines d'oxyde inorganique ; m est 0 ou 1 ; n est un nombre entier de 2 à 8 indiquant le nombre de groupes méthylène dans une chaîne ; R¹ représente un groupe aliphatique dérivé d'un groupe époxy ou d'un groupe glycidyle et ayant un groupe hydroxyle ou un groupe alkylène hydroxyle lié directement à la chaîne linéaire de 2 à 8 atomes de carbone, et les deux extrémités sont liées à deux atomes d'oxygène adjacents à celles-ci ; au moins un de *1-, *2- et *3- est une espèce liante capable de se lier aux surfaces des particules fines d'oxyde inorganique, et au moins un de *1-, *2- et *3- est lié aux surfaces des particules fines d'oxyde inorganique ; et *4- représente une liaison avec une molécule de polycarbonate.

2. Composition de résine selon la revendication 1, dans laquelle le nombre entier n est 3.

3. Composition de résine selon la revendication 1, dans laquelle le nombre d'atomes de carbone de la chaîne linéaire est 3.

4. Composition de résine selon la revendication 1, dans laquelle les particules fines d'oxyde inorganique ont un diamètre de particules principales moyen inférieur ou égal à 380 nm, sont liées de manière covalente aux molécules de polycarbonate par l'intermédiaire des couches superficielles de celles-ci incluant des groupes époxy, et sont dispersées.

5. Composition de résine selon la revendication 1, dans laquelle, dans les particules fines d'oxyde inorganique, un rapport de modification de surface par les groupes époxy est de 5 à 50 %.

6. Composition de résine selon la revendication 1, dans laquelle les particules fines d'oxyde inorganique sont constituées de particules fines de silice.

7. Composition de résine selon la revendication 6, dans laquelle les particules fines de silice sont de la silice colloïdale.

8. Composition de résine selon la revendication 6, dans laquelle les particules fines de silice ont une forme sphérique, d'haltère ou de chaîne.

9. Composition de résine selon la revendication 1, dans laquelle une quantité compactée des particules fines d'oxyde inorganique par rapport à la composition de résine est de 5 % en poids à 50 % en poids.

10. Composition de résine selon la revendication 1, dans laquelle un poids moléculaire moyen en poids des molécules de polycarbonate par la conversion en polystyrène déterminé par CG en utilisant du chloroforme à 40 °C est de 800 à 20 000.

11. Composition de résine selon la revendication 1, dans laquelle la molécule de polycarbonate est une molécule de polycarbonate aromatique.

12. Article moulé constitué d'une composition de résine thermoplastique selon l'une quelconque des revendications précédentes.

13. Procédé de production d'une composition de résine comprenant les étapes de :
formation de couches superficielles incluant des groupes époxy sur les particules fines d'oxyde inorganique ayant un diamètre de particules principales moyen inférieur ou égal à 380 nm en utilisant des groupes liants de type éther aliphatique représentés par la formule générale (I) suivante ;
mélange des particules fines d'oxyde inorganique sur lesquels les couches superficielles ayant des groupes époxy sont formées avec un monomère en tant que matière première de molécules de polycarbonate, donnant ainsi un mélange ; et
chauffage du mélange dans une plage de température de 150 à 350 °C : 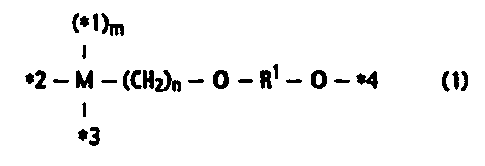 dans laquelle M représente un élément métallique tri- ou tétravalent capable de se lier aux surfaces des particules fines d'oxyde inorganique ; m est 0 ou 1 ; n est un nombre entier de 2 à 8 indiquant le nombre de groupes méthylène dans une chaîne ; R¹ représente un groupe aliphatique dérivé d'un groupe époxy ou d'un groupe glycidyle et ayant un groupe hydroxyle ou un groupe alkylène hydroxyle lié directement à la chaîne linéaire de 2 à 8 atomes de carbone, et les deux extrémités sont liées à deux atomes d'oxygène adjacents à celles-ci ; au moins un de *1-, *2- et *3- est une espèce liante capable de se lier aux surfaces des particules fines d'oxyde inorganique, et au moins un de *1-, *2- et *3- est lié aux surfaces des particules fines d'oxyde inorganique ; et *4- représente une liaison avec une molécule de polycarbonate.

14. Procédé de production d'une composition de résine selon la revendication 13, dans lequel l'étape d'obtention du mélange comprend l'étape de formation d'un intermédiaire de la composition de résine par liaison covalente du monomère aux couches superficielles ayant des groupes époxy.

15. Procédé de production d'une composition de résine selon la revendication 14, dans lequel le monomère est le 2,2-bis(4-hydroxyphényl)propane.

16. Intermédiaire d'une composition de résine, l'intermédiaire comprenant des particules fines d'oxyde inorganique ayant un diamètre de particules principales inférieur ou égal à 380 nm, qui sont liées à un groupe liant de type éther aliphatique représenté par la formule générale suivante : 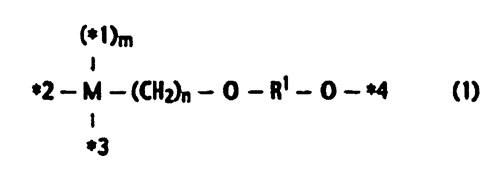 dans laquelle M représente un élément métallique tri- ou tétravalent capable de se lier aux surfaces des particules fines d'oxyde inorganique ; m est 0 ou 1 ; n est un nombre entier de 2 à 8 indiquant le nombre de groupes méthylène dans une chaîne ; R¹ représente un groupe aliphatique dérivé d'un groupe époxy ou d'un groupe glycidyle et ayant un groupe hydroxyle ou un groupe alkylène hydroxyle lié directement à la chaîne linéaire de 2 à 8 atomes de carbone, et les deux extrémités sont liées à deux atomes d'oxygène adjacents à celles-ci ; au moins un de *1-, *2- et *3- est une espèce liante capable de se lier aux surfaces des particules fines d'oxyde inorganique, et au moins un de *1-, *2- et *3- est lié aux surfaces des particules fines d'oxyde inorganique ; et *4- représente une liaison avec un monomère en tant que matière première d'une molécule de polycarbonate.

17. Intermédiaire d'une composition de résine selon la revendication 16, dans lequel, dans les particules fines d'oxyde inorganique, un rapport de modification de surface par les groupes époxy est de 5 à 50 %.

18. Intermédiaire d'une composition de résine selon la revendication 16, dans lequel les particules fines d'oxyde inorganique ont un diamètre de particules principales de 5 nm à 200 nm.

19. Intermédiaire d'une composition de résine selon la revendication 16, dans lequel les particules fines d'oxyde inorganique ont un diamètre de particules principales de 5 nm à 100 nm.

20. Intermédiaire d'une composition de résine selon la revendication 16, dans lequel les particules fines d'oxyde inorganique sont constituées de particules fines de silice.

21. Intermédiaire d'une composition de résine selon la revendication 20, dans lequel les particules fines de silice sont de la silice colloïdale.

22. Intermédiaire d'une composition de résine selon la revendication 21, dans lequel les particules fines de silice ont une forme sphérique, d'haltère ou de chaîne.
